# EUROPEAN PATENT APPLICATION

(11) **EP 4 546 126 A1**
(43) Date of publication of application: **30.04.2025**
(21) Application number: 23878979.6
(22) Date of filing: 09.10.2023
(51) Int. Cl.: G06F 9/451

(54) **INTERFACE GENERATION METHOD AND ELECTRONIC DEVICE**

(30) Priority: 19.10.2022 CN 202211281882
(71) Applicant: Huawei Technologies Co., Ltd., Shenzhen, Guangdong 518129 (CN)
(72) Inventor: LIAO, Heng, Shenzhen, Guangdong 518129 (CN); LU, Renmiao, Shenzhen, Guangdong 518129 (CN); LI, Yu, Shenzhen, Guangdong 518129 (CN); LIU, Daoyong, Shenzhen, Guangdong 518129 (CN); ZHOU, Yuehai, Shenzhen, Guangdong 518129 (CN); XU, Jun, Shenzhen, Guangdong 518129 (CN)
(74) Representative: Pfenning, Meinig & Partner mbB
(86) International application number: PCT/CN2023/123558
(87) International publication number: WO 2024/082987

(57) **Abstract**

This application discloses an interface generation method and an electronic device, and relates to the field of electronic technologies. The interface generation method provided in this application includes: in a process in which an electronic device displays an animation through an application, in consideration of interface continuity in the animation process, generating a first rendering instruction and generating a frame of interface of the animation based on the first rendering instruction, then directly modifying the first rendering instruction to a second rendering instruction based on animation logic, and generating another frame of interface of the animation based on the second rendering instruction. A UI thread does not need to perform measurement, layout, and drawing and recording, and a render thread does not need to generate each frame of interface in the animation process either. This improves an energy efficiency ratio of interface generation. The interface continuity means that, although a property like a size, a location, transparency, and/or a color of a control change/changes in the animation process, the control exists in the animation process.

## Description

This application claims priority to Chinese Patent Application No. 202211281882.4, filed with the China National Intellectual Property Administration on October 19, 2022 and entitled "INTERFACE GENERATION METHOD AND ELECTRONIC DEVICE", which is incorporated herein by reference in its entirety.

### TECHNICAL FIELD

This application relates to the field of electronic technologies, and in particular, to an interface generation method and an electronic device.

### BACKGROUND

With development of electronic technologies, a resolution and a refresh rate of a screen of an electronic device are increasingly high. The resolution of the screen affects pixels included in one frame of interface, and the refresh rate affects time for generating one frame of interface.

Before the electronic device displays a first frame of interface, the electronic device needs to consume computing resources to generate the first frame of interface. Before the electronic device displays a second frame of interface, the electronic device needs to consume computing resources again to generate the second frame of interface.

When the electronic device does not generate the second frame of interface in time, content displayed on the screen of the electronic device freezes. To ensure that the second frame of interface can be generated in time, the electronic device usually increases a working frequency of a CPU to improve a computing capability of the electronic device. Consequently, energy consumption of generating one frame of interface by the electronic device is high, and an energy efficiency ratio of interface generation is reduced.

### SUMMARY

Embodiments of this application provide an interface generation method and an electronic device. When continuity of an animation is considered, after generating a first rendering instruction, the electronic device may directly update the first rendering instruction based on logic of the animation, and generate, based on an updated first rendering instruction, an interface in an animation process. Further, according to the interface generation method provided in embodiments of this application, a quantity of times that an application traverses views and generates a bitmap through rendering may be reduced, to further improve an energy efficiency ratio of interface generation.

According to a first aspect, an embodiment of this application provides an interface generation method, applied to an electronic device, where a first application is installed on the electronic device, and the method includes: The electronic device determines interface description information in a first animation process after the electronic device receives a first operation, where the first operation is used to trigger the electronic device to display a first animation through the first application; the electronic device generates a first rendering instruction, where the rendering instruction is used to be executed by a GPU to generate data of a first interface, and the first interface is a frame of interface in the first animation process; the electronic device updates the first rendering instruction to a second rendering instruction based on the interface description information in the animation process; and the electronic device generates a second interface based on the second rendering instruction, where the second interface is different from the first interface, and the second interface is a frame of interface in the first animation process.

In the foregoing embodiment, the electronic device directly modifies the first rendering instruction to the second rendering instruction based on logic of the animation, so that overheads of generating the second instruction are reduced, and an energy efficiency ratio of interface generation is further improved.

With reference to some embodiments of the first aspect, in some embodiments, that the electronic device updates the first rendering instruction to a second rendering instruction based on the interface description information in the animation process specifically includes: The electronic device determines a first parameter based on the interface description information in the first animation process, where the first parameter is used to describe a changing property of a first control on the second interface, and the first control is a view whose display effect changes on the second interface; and the electronic device updates the first rendering instruction based on the first parameter, to obtain the second rendering instruction.

In the foregoing embodiments, the electronic device may determine the changing control, determine the changing property of the second control, and then modify the first rendering instruction to the second rendering instruction.

With reference to some embodiments of the first aspect, in some embodiments, before the electronic device receives the first operation, the method further includes: The electronic device displays a desktop, where the desktop includes the first control, and the first control corresponds to the first application. That the electronic device receives a first operation specifically includes: The electronic device detects that a user taps the first control. After the electronic device receives the first operation, the method further includes: The first animation is a start animation of the first application, and in the first animation, a location and a size of a second control change. That the electronic device determines a first parameter based on the interface description information in the first animation process specifically includes: The first electronic device determines a first location, where the first parameter includes the first location, the first location is a location of the second control on the second interface, and the second interface is a non-first frame of interface of the first animation. That the electronic device updates the first rendering instruction based on the first parameter, to obtain the second rendering instruction specifically includes: The electronic device modifies a vertex location of the second control in the first rendering instruction to the first location, to obtain the second rendering instruction.

In the foregoing embodiments, in the start animation process of the application, if the location and the size of the second control change, the first rendering instruction may be modified, to obtain the second rendering instruction corresponding to the second interface, so as to generate the second interface based on the second rendering instruction.

With reference to some embodiments of the first aspect, in some embodiments, that the electronic device modifies a vertex location of the second control in the first rendering instruction to the first location, to obtain the second rendering instruction specifically includes: The electronic device updates, based on the first parameter, a vertex location used in a first method call to the first location, to obtain the second rendering instruction, where the first method call is a method call executed by the GPU to draw the second control.

In the foregoing embodiments, because the location and the size of the second control change, an input parameter in the method call for drawing the second control in the first rendering instruction may be modified, to obtain the second rendering instruction.

With reference to some embodiments of the first aspect, in some embodiments, the first parameter is used to describe a color, a vertex location, transparency, and/or a scaling ratio of the first view.

In the foregoing embodiments, the first parameter may include a color, a vertex location, transparency, a scaling ratio, and/or the like that are/is used to describe a view related to the animation. This is not limited herein.

With reference to some embodiments of the first aspect, in some embodiments, the first parameter is written by the first application to a first data structure, the first data structure is bound to a render pipeline, and in the render pipeline, the first parameter is read by the electronic device to modify a rendering instruction.

In the foregoing embodiments, the first parameter needs to be transferred to the render pipeline, so that the first parameter can be read by the electronic device when the rendering instruction is modified.

With reference to some embodiments of the first aspect, in some embodiments, the first data structure is uniform.

In the foregoing embodiments, the first parameter may be located in uniform, and further participate in the render pipeline.

With reference to some embodiments of the first aspect, in some embodiments, the method further includes: After the electronic device receives the first operation, the electronic device configures an update task, where the update task is configured in a GPU driver. That the electronic device updates the first rendering instruction based on the first parameter, to obtain the second rendering instruction specifically includes: The electronic device replaces a second parameter in the first rendering instruction with the first parameter by using the update task, to obtain the second rendering instruction, where the second parameter is used to describe a property of the first control on the first interface.

In the foregoing embodiments, the update task may be configured in the GPU driver, and before the GPU is driven to generate the second interface, the second parameter in the rendering instruction is replaced with the first parameter, to generate the second rendering instruction.

With reference to some embodiments of the first aspect, in some embodiments, the method further includes: The electronic device determines, based on the interface description information in the first animation process, that a background map or a foreground map of the first control on the first interface is different from a background map or a foreground map of the first control on the second interface; and the electronic device loads a first texture, where the first texture is the background map or the foreground map of the first control on the second interface, the first parameter includes an identifier of the first texture, and the first texture is a background map or a foreground map of the first view on the second interface.

In the foregoing embodiments, when the animation further relates to texture update of the view, because the second rendering instruction is not generated by the electronic device based on a render tree after view traversing, the electronic device further needs to read a texture memory, and transfer the identifier of the texture to the render pipeline by using the first parameter.

With reference to some embodiments of the first aspect, in some embodiments, a method call of the first rendering instruction is the same as a method call of the second rendering instruction, a resource in the first rendering instruction is different from a resource in the second rendering instruction, the resource in the first rendering instruction is a variable or a fixed value used when the method call of the first rendering instruction is executed, and the resource in the second rendering instruction is a variable or a fixed value used when the method call of the second rendering instruction is executed.

With reference to some embodiments of the first aspect, in some embodiments, that the electronic device determines interface description information in a first animation process after the electronic device receives a first operation specifically includes: After the electronic device receives the first operation, the electronic device determines that a triggered animation is the first animation; the electronic device determines a view related to the first animation, where the view related to the first animation is a view whose display content changes in the first animation process; and the electronic device determines a property of the view related to the first animation on one or more interfaces in the first animation process.

In the foregoing embodiments, the method call of the first rendering instruction is the same as the method call of the second rendering instruction, but resources used for the method call are different.

With reference to some embodiments of the first aspect, in some embodiments, that the electronic device determines interface description information in a first animation process after the electronic device receives a first operation specifically includes: After the electronic device receives the first operation, the electronic device determines that a triggered animation is the first animation; the electronic device determines a view related to the first animation, where the view related to the first animation is a view whose display content changes in the first animation process; and the electronic device determines a property of the view related to the first animation on one or more interfaces in the first animation process.

In the foregoing embodiments, the electronic device may determine the interface description information in the triggered animation process, to determine the first parameter. In addition, because a property of a view on a next frame of interface does not need to be known until the next frame of interface is generated, a UI thread and a render thread do not need to participate in the animation process.

According to a second aspect, an embodiment of this application provides an interface generation method, applied to an electronic device, where a first application is installed on the electronic device, and the method includes: After the electronic device receives a first operation, the first application generates a first render tree, where the first render tree stores a drawing operation used to generate a first interface, the first interface is a first frame of interface of the first application in a first animation, the first operation is used to trigger the electronic device to display the first animation through the first application, from the first interface to a second interface, a location of a first control changes, the first control is at a first location on the second interface, and the second interface is a non-first frame of interface in the first animation; the first application converts the first render tree into a first rendering instruction; the electronic device calls a GPU based on the first rendering instruction, to generate the first interface; the electronic device updates a first parameter in the first rendering instruction to the first location, to obtain a second rendering instruction; and the electronic device calls the GPU based on the second rendering instruction, to generate the second interface.

In the foregoing embodiment, in a process of generating the first frame of interface of the animation, the electronic device generates the first rendering instruction based on the render tree; and in a process of generating another frame of interface of the animation, the electronic device updates the first rendering instruction to the second rendering instruction, to generate the another frame of interface. The electronic device does not need to generate a render tree corresponding to the second rendering instruction, and the electronic device does not need to generate the second rendering instruction based on the render tree. This improves an energy efficiency ratio of interface generation in the animation process.

With reference to some embodiments of the second aspect, in some embodiments, after the electronic device receives the first operation, the electronic device determines interface description information in a first animation process, where the interface description information in the first animation process includes a second location.

In the foregoing embodiments, the electronic device further needs to determine a property of a view of the second frame of interface before the second frame of interface starts to be generated, to update the first rendering instruction to the second rendering instruction.

With reference to some embodiments of the second aspect, in some embodiments, after the electronic device receives the first operation, the electronic device configures an update task, where the update task is configured in a GPU driver. That the electronic device updates a first parameter in the first rendering instruction to the first location, to obtain a second rendering instruction specifically includes: The electronic device updates the first parameter in the first rendering instruction to the first location by using the update task, to obtain the second rendering instruction.

In the foregoing embodiments, the update task may be configured in the GPU driver, to update the first rendering instruction to the second rendering instruction. After the second rendering instruction is generated, the GPU generates the second frame of interface.

With reference to some embodiments of the second aspect, in some embodiments, the method further includes: The electronic device determines, based on the interface description information in the first animation process, that a background map or a foreground map of the first control on the first interface is different from a background map or a foreground map of the first control on the second interface; and the electronic device loads a first texture, where the first texture is the background map or the foreground map of the first control on the second interface, the first parameter includes an identifier of the first texture, and the first texture is a background map or a foreground map of the first view on the second interface.

In the foregoing embodiments, when the animation further relates to texture update of the view, because the second rendering instruction is not generated by the electronic device based on a render tree after view traversing, the electronic device further needs to read a texture memory, and transfer the identifier of the texture to the render pipeline by using the first parameter.

According to a third aspect, an embodiment of this application provides an electronic device, where a first application is installed on the electronic device, and the electronic device includes one or more processors and a memory. The memory is coupled to the one or more processors, the memory is configured to store computer program code, the computer program code includes computer instructions, and the one or more processors invoke the computer instructions, to enable the electronic device to perform the following operations: The electronic device determines interface description information in a first animation process after the electronic device receives a first operation, where the first operation is used to trigger the electronic device to display a first animation through the first application; the electronic device generates a first rendering instruction, where the rendering instruction is used to be executed by a GPU to generate data of a first interface, and the first interface is a frame of interface in the first animation process; the electronic device updates the first rendering instruction to a second rendering instruction based on the interface description information in the animation process; and the electronic device generates a second interface based on the second rendering instruction, where the second interface is different from the first interface, and the second interface is a frame of interface in the first animation process.

With reference to some embodiments of the third aspect, in some embodiments, the one or more processors are specifically configured to invoke the computer instructions, to enable the electronic device to perform the following operations: The electronic device determines a first parameter based on the interface description information in the first animation process, where the first parameter is used to describe a changing property of a first control on the second interface, and the first control is a view whose display effect changes on the second interface; and the electronic device updates the first rendering instruction based on the first parameter, to obtain the second rendering instruction.

With reference to some embodiments of the third aspect, in some embodiments, the one or more processors are further configured to invoke the computer instructions, to enable the electronic device to perform the following operation: The electronic device displays a desktop, where the desktop includes a first control, and the first control corresponds to the first application. The one or more processors are specifically configured to invoke the computer instructions, to enable the electronic device to perform the following operation: The electronic device detects that a user taps the first control. The one or more processors are further configured to invoke the computer instructions, to enable the electronic device to perform the following operation: The first animation is a start animation of the first application, and in the first animation, a location and a size of a second control change. The one or more processors are specifically configured to invoke the computer instructions, to enable the electronic device to perform the following operations: The first electronic device determines a first location, where the first parameter includes the first location, the first location is a location of the second control on the second interface, and the second interface is a non-first frame of interface of the first animation; and the electronic device modifies a vertex location of the second control in the first rendering instruction to the first location, to obtain the second rendering instruction.

With reference to some embodiments of the third aspect, in some embodiments, the one or more processors are specifically configured to invoke the computer instructions, to enable the electronic device to perform the following operation: The electronic device updates, based on the first parameter, a vertex location used in a first method call to the first location, to obtain the second rendering instruction, where the first method call is a method call executed by the GPU to draw the second control.

With reference to some embodiments of the third aspect, in some embodiments, the first parameter is used to describe a color, a vertex location, transparency, and/or a scaling ratio of the first view.

With reference to some embodiments of the third aspect, in some embodiments, the first parameter is written by the first application to a first data structure, the first data structure is bound to a render pipeline, and in the render pipeline, the first parameter is read by the electronic device to modify a rendering instruction.

With reference to some embodiments of the third aspect, in some embodiments, the first data structure is uniform.

With reference to some embodiments of the third aspect, in some embodiments, the one or more processors are further configured to invoke the computer instructions, to enable the electronic device to perform the following operation: After the electronic device receives the first operation, the electronic device configures an update task, where the update task is configured in a GPU driver. That the electronic device updates the first rendering instruction based on the first parameter, to obtain the second rendering instruction specifically includes: The electronic device replaces a second parameter in the first rendering instruction with the first parameter by using the update task, to obtain the second rendering instruction, where the second parameter is used to describe a property of the first control on the first interface.

With reference to some embodiments of the third aspect, in some embodiments, the one or more processors are further configured to invoke the computer instructions, to enable the electronic device to perform the following operations: The electronic device determines, based on the interface description information in the first animation process, that a background map or a foreground map of the first control on the first interface is different from a background map or a foreground map of the first control on the second interface; and the electronic device loads a first texture, where the first texture is the background map or the foreground map of the first control on the second interface, the first parameter includes an identifier of the first texture, and the first texture is a background map or a foreground map of the first view on the second interface.

With reference to some embodiments of the third aspect, in some embodiments, a method call of the first rendering instruction is the same as a method call of the second rendering instruction, a resource in the first rendering instruction is different from a resource in the second rendering instruction, the resource in the first rendering instruction is a variable or a fixed value used when the method call of the first rendering instruction is executed, and the resource in the second rendering instruction is a variable or a fixed value used when the method call of the second rendering instruction is executed.

With reference to some embodiments of the third aspect, in some embodiments, the one or more processors are specifically configured to invoke the computer instructions, to enable the electronic device to perform the following operations: After the electronic device receives the first operation, the electronic device determines that a triggered animation is the first animation; the electronic device determines a view related to the first animation, where the view related to the first animation is a view whose display content changes in the first animation process; and the electronic device determines a property of the view related to the first animation on one or more interfaces in the first animation process.

According to a fourth aspect, an embodiment of this application provides an electronic device, where a first application is installed on the electronic device, and the electronic device includes one or more processors and a memory. The memory is coupled to the one or more processors, the memory is configured to store computer program code, the computer program code includes computer instructions, and the one or more processors invoke the computer instructions, to enable the electronic device to perform the following operations: After the electronic device receives a first operation, the first application generates a first render tree, where the first render tree stores a drawing operation used to generate a first interface, the first interface is a first frame of interface of the first application in a first animation, the first operation is used to trigger the electronic device to display the first animation through the first application, from the first interface to a second interface, a location of a first control changes, the first control is at a first location on the second interface, and the second interface is a non-first frame of interface in the first animation; the first application converts the first render tree into a first rendering instruction; the electronic device calls a GPU based on the first rendering instruction, to generate the first interface; the electronic device updates a first parameter in the first rendering instruction to the first location, to obtain a second rendering instruction; and the electronic device calls the GPU based on the second rendering instruction, to generate the second interface.

With reference to some embodiments of the fourth aspect, in some embodiments, the one or more processors are further configured to invoke the computer instructions, to enable the electronic device to perform the following operation: After the electronic device receives the first operation, the electronic device determines interface description information in a first animation process, where the interface description information in the first animation process includes a second location.

With reference to some embodiments of the fourth aspect, in some embodiments, the one or more processors are further configured to invoke the computer instructions, to enable the electronic device to perform the following operation: After the electronic device receives the first operation, the electronic device configures an update task, where the update task is configured in a GPU driver. That the electronic device updates a first parameter in the first rendering instruction to the first location, to obtain a second rendering instruction specifically includes: The electronic device updates the first parameter in the first rendering instruction to the first location by using the update task, to obtain the second rendering instruction.

With reference to some embodiments of the fourth aspect, in some embodiments, the one or more processors are further configured to invoke the computer instructions, to enable the electronic device to perform the following operations: The electronic device determines, based on the interface description information in the first animation process, that a background map or a foreground map of the first control on the first interface is different from a background map or a foreground map of the first control on the second interface; and the electronic device loads a first texture, where the first texture is the background map or the foreground map of the first control on the second interface, the first parameter includes an identifier of the first texture, and the first texture is a background map or a foreground map of the first view on the second interface.

According to a fifth aspect, an embodiment of this application provides a chip system. The chip system is used in an electronic device, the chip system includes one or more processors, and the processor is configured to invoke computer instructions, so that the electronic device performs the method described in any one of the first aspect, the second aspect, the possible implementations of the first aspect, and the possible implementations of the second aspect.

According to a sixth aspect, an embodiment of this application provides a computer program product including instructions. When the computer program product runs on an electronic device, the electronic device is enabled to perform the method described in any one of the first aspect, the second aspect, the possible implementations of the first aspect, and the possible implementations of the second aspect.

According to a seventh aspect, an embodiment of this application provides a computer-readable storage medium, including instructions. When the instructions are run on an electronic device, the electronic device is enabled to perform the method described in any one of the first aspect, the second aspect, the possible implementations of the first aspect, and the possible implementations of the second aspect.

It may be understood that the electronic devices provided in the fourth aspect and the fifth aspect, the chip system provided in the fifth aspect, the computer program product provided in the sixth aspect, and the computer storage medium provided in the seventh aspect are all configured to perform the methods provided in embodiments of this application. Therefore, for beneficial effects that can be achieved, refer to beneficial effects in a corresponding method, and details are not described herein again.

### BRIEF DESCRIPTION OF DRAWINGS

FIG. 1 is an example diagram of generating a bitmap by an application according to an embodiment of this application;
FIG. 2A and FIG. 2B are example diagrams of an interface change in an animation process according to an embodiment of this application;
FIG. 3 is an example diagram of interface generation in an animation process according to an embodiment of this application;
FIG. 4A and FIG. 4B are example diagrams in which a UI thread executes a measurement method call and a layout method call to determine a location and a size of a control of a non-animation object according to an embodiment of this application;
FIG. 5 is an example diagram of a procedure of an interface generation method according to an embodiment of this application;
FIG. 6A is an example diagram of updating a GPU instruction by updating a vertex location according to an embodiment of this application;
FIG. 6B to FIG. 6E are other example diagrams of updating a GPU instruction by updating a vertex location according to an embodiment of this application;
FIG. 7A to FIG. 7D are example diagrams of a data procedure in an interface generation method according to an embodiment of this application;
FIG. 8A and FIG. 8B are example diagrams of implementing a three-dimensional animation method according to an embodiment of this application;
FIG. 9 is an example diagram of a hardware structure of an electronic device according to an embodiment of this application;
FIG. 10 is an example diagram of a software architecture of an electronic device according to an embodiment of this application; and
FIG. 11A and FIG. 11B are example diagrams of a data flow and software module interaction in an interface generation method according to an embodiment of this application.

### DESCRIPTION OF EMBODIMENTS

Terms used in the following embodiments of this application are merely intended to describe specific embodiments, but are not intended to limit this application. As used in the specification and the appended claims of this application, singular expressions "a", "one", "the", "the foregoing", "such a", and "this" are also intended to include plural expressions unless otherwise clearly indicated in the context. It should be further understood that the term "and/or" used in this application indicates and includes any or all possible combinations of one or more listed items.

The following terms "first" and "second" are merely used for description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

The term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), which is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

For ease of understanding, terms and concepts related to embodiments of this application are first described below. Terms used in implementations of the present invention are merely intended to explain specific embodiments of the present invention, and are not intended to limit the present invention.

An interface is used as a medium interface for interaction and information exchange between an application and a user. Each time a vertical synchronization signal arrives, an electronic device needs to generate an application interface for a foreground application. A frequency of the vertical synchronization signal is related to a refresh rate of a screen of the electronic device. For example, the frequency of the vertical synchronization signal is the same as the refresh rate of the screen of the electronic device.

To be specific, each time before content displayed on the screen is refreshed, the electronic device needs to generate an application interface for the foreground application, to present the newly generated interface of the application to the user when the screen is refreshed.

When the electronic device generates an interface of an application, the application needs to perform rendering to generate a bitmap (bitmap), and transfer the bitmap of the application to a surface flinger (SurfaceFlinger). To be specific, the application acts as a producer to draw and generate the bitmap, and stores the bitmap in a buffer queue (BufferQueue) provided by the surface flinger. The surface flinger acts as a consumer to continuously obtain the bitmap generated by the application from BufferQueue. The bitmap is located on a surface generated by the application, and the surface is filled in BufferQueue.

After the surface flinger obtains a bitmap of a visible application, the surface flinger and a hardware composer (Hardware Composer, HWC) determine a layer composition manner in which a bitmap is used as a layer (layer).

After the surface flinger and/or the hardware composer perform/performs bitmap composition, the surface flinger and/or the hardware composer fill/fills a composed bitmap into a frame buffer (Frame Buffer) and transfers the composed bitmap to a display subsystem (Display Subsystem, DSS). After obtaining the composed bitmap, the DSS may display the composed bitmap on the screen. The frame buffer may be an on-screen buffer (on-screen buffer). The bitmap may also be referred to as a layer on the surface flinger.

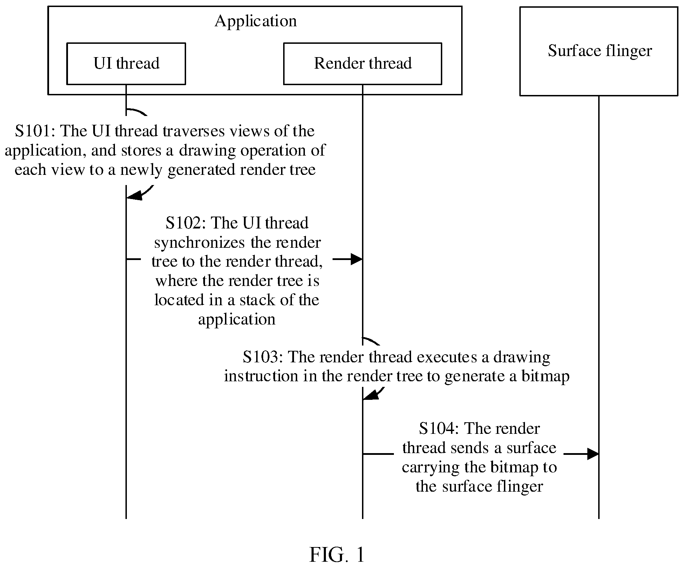

A process of generating the bitmap by the application is shown in FIG. 1.

FIG. 1 is an example diagram of generating a bitmap by an application according to an embodiment of this application.

As shown in FIG. 1, after receiving a vertical synchronization signal (Vsync), the application starts to generate a bitmap. Specifically, there may be four steps, which are respectively step S101, step S102, step S103, and step S104.

S101: A UI thread traverses views of the application, and stores a drawing operation of each view to a newly generated render tree.

The UI thread (UI thread, UI Thread) makes a view hierarchy (view hierarchy) ineffective. The UI thread traverses the views (views) of the application through a measurement method call (measure()), a layout method call (layout()), and a drawing method call (draw(), which may alternatively be referred to as a drawing and recording method call), determines and stores the drawing operation of each view, and records the view and the drawing operation (for example, drawline) related to the view to a drawing instruction list (displaylist) of a render node (RenderNode) of the render tree. Data stored in the drawing instruction list may be a drawing operation structure (DrawOP or DrawListOP).

The view is a basic element that forms an application interface, and one control on the interface may correspond to one or more views.

Optionally, in some implementations of this application, in the drawing method call, the UI thread of the application further reads content carried in a view to a memory, for example, an image carried in an image view (imageview), or a text carried in a text view (textview). Alternatively, in the drawing method call, the UI thread of the application determines an operation of reading content carried in a view to a memory, and records the operation into the drawing instruction list. The drawing operation structure in the drawing instruction list may also be referred to as a drawing instruction.

The drawing operation structure is a data structure, and is used to draw a graph, for example, draw a line, draw a rectangle, or draw a text. When render nodes are traversed, the drawing operation structure is converted, through a rendering engine, into an API call of an image processing library, for example, an interface call of an OpenGL ES library, a Vulkan library, or a Metal library. For example, in the rendering engine (Skia library), drawline is encapsulated as DrawLineOp. DrawLineOp is a data structure, and the data structure includes drawn data, for example, information such as a length and a width of a line. DrawLineOp is further encapsulated as an interface call in the OpenGL ES library, the Vulkan library, or the Metal library, to obtain a GPU instruction. The GPU instruction is used to call a GPU to generate a bitmap. The OpenGL ES library, the Vulkan library, and the Metal library may be collectively referred to as an image processing library or a graphics rendering library. In a process of generating a frame of interface, the electronic device generates a rendering instruction by using the OpenGL ES library, the Vulkan library, or the Metal library. The image processing library provides a graphics rendering API, driver support, and the like.

The GPU instruction may also be referred to as a rendering instruction.

DrawOP may be stored, in a form of a chained data structure, in a stack of the application.

The drawing instruction list may be a buffer. The buffer records all drawing operation structures included in a frame of interface of the application or identifiers, such as addresses and sequence numbers, of all drawing operations included in a frame of interface of the application. When the application has a plurality of windows or is displayed in different display (display) areas, a plurality of render trees corresponding to the plurality of windows need to be independently generated.

The render tree is generated by the UI thread, and is used to generate a data structure of an application interface. The render tree may include a plurality of render nodes, and each render node includes a rendering property and a drawing instruction list. The render tree records a part or all of information for generating a frame of interface of the application.

Optionally, in some implementations of this application, the UI thread may traverse only views of a dirty area (which may also be referred to as an area that needs to be redrawn), to generate a differential render tree. After the differential render tree is transferred/synchronized to the render thread, the render thread may determine, based on the differential render tree and a render tree used for rendering of a previous frame, a render tree that needs to be used for rendering of a current frame of interface.

S102: The UI thread synchronizes the render tree to the render thread, where the render tree is located in the stack of the application.

The UI thread transfers/synchronizes the render tree to the render thread (Render Thread), where the render tree is located in a stack (stack) of a process corresponding to the application.

S103: The render thread executes a drawing instruction in the render tree to generate a bitmap.

The render thread first obtains a hardware canvas (HardwareCanvas), and then performs, on the hardware canvas, a drawing operation on the render tree, to generate the bitmap. The hardware canvas is located on a surface held by the application, and the surface carries the bitmap or data that is in another format and that is used to store image information.

S104: The render thread sends the surface carrying the bitmap to a surface flinger.

The render thread sends the generated bitmap to the surface flinger through the surface, to participate in layer composition.

Step S101 may be considered as a construction phase, and is mainly responsible for determining properties such as a size, a location, and transparency of each view in the application. For example, drawLine in the view may be encapsulated as DrawLineOp during construction, where DrawLineOp includes drawn data such as a length and a width of a line, may further include an interface call corresponding to DrawLineOp of the underlying image processing library, and is used to call an underlying graphics library to generate a bitmap in a rendering phase.

Similarly, it may be considered that step S103 is the rendering phase and is mainly responsible for traversing the render nodes of the render tree, and performing the drawing operation on each render node, to generate the bitmap on the hardware canvas. In this process, the render thread calls the underlying graphics processing library like the OpenGL ES library (or an OpenGL library), the Vulkan library, or the Metal library through the rendering engine, and further calls the GPU to complete rendering to generate the bitmap.

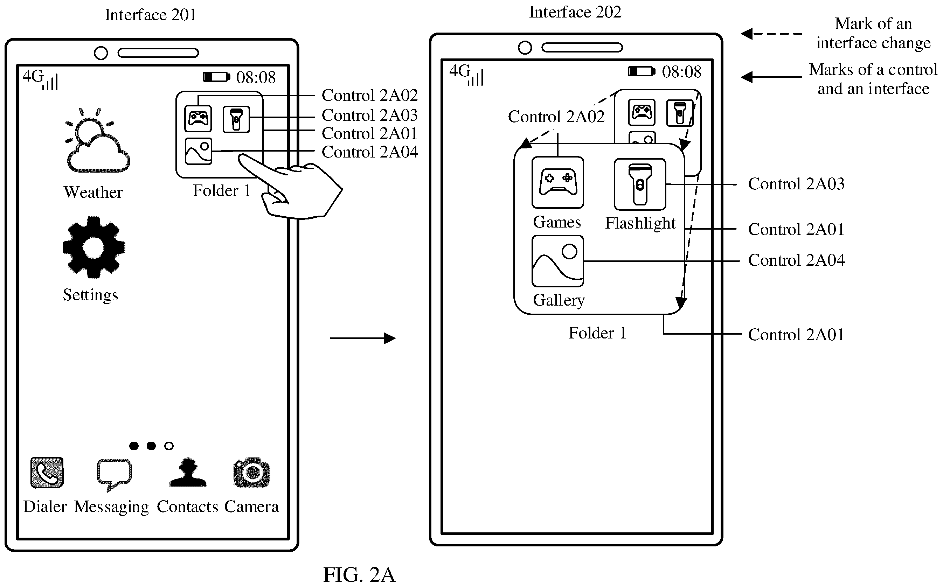

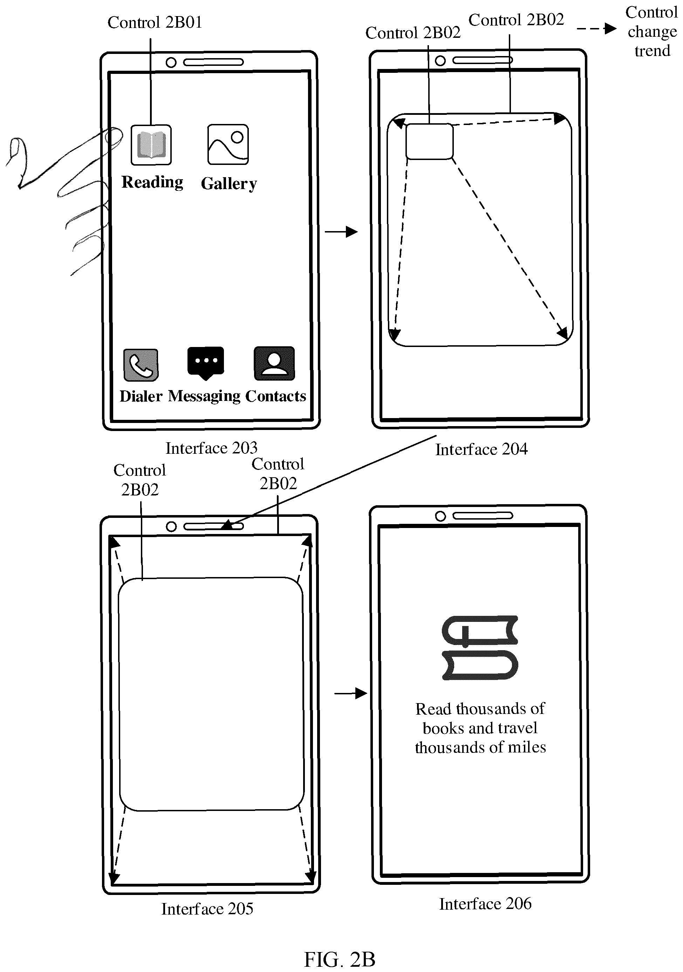

In most scenarios, to comply with a visual habit of a consumer, content displayed by an application usually changes continuously rather than jumps. In other words, same displayed content generally appears on a plurality of consecutive frames of interfaces, for example, as shown in the following FIG. 2A and FIG. 2B.

FIG. 2A and FIG. 2B are example diagrams of an interface change in an animation process according to an embodiment of this application.

As shown in FIG. 2A, an interface displayed by an electronic device is an interface 201, and the interface 201 may be an interface of a desktop application. On the interface 201, the electronic device displays a control 2A01, a control 2A02, a control 2A03, and a control 2A04. The control 2A02, the control 2A03, and the control 2A04 are child controls of the control 2A01. The control 2A01 may be referred to as a folder icon, the control 2A02 is an icon control corresponding to a game application, the control 2A03 is an icon control corresponding to a flashlight application, and the control 2A04 is an icon control corresponding to a gallery.

After a user taps the control 2A01, a size and a location of the control 2A01 change, as shown on an interface 202. Tapping the control 2A01 may be tapping an area that is in the control 2A01 and that does not include the control 2A02, the control 2A03, and the control 2A04.

On the interface 202, as the size and the location of the control 2A01 change, sizes and locations of the control 2A02, the control 2A03, and the control 2A04 also change.

Optionally, in some implementations of this application, after the user taps the control 2A01 on the interface 201, an interface change shown on the interface 202 is an animation in embodiments of this application.

As shown in FIG. 2B, interface changes in an application startup process are sequentially an interface 203, an interface 204, an interface 205, and an interface 206. The interface 204 and the interface 205 are interface changes in an animation in embodiments of this application.

The interface 203 is an interface of the desktop application, the interface 203 includes a control 2B01, and the control 2B01 is an icon of a reading application. After the user taps the control 2B01, the gallery application is started. A startup process is shown on the interface 204, the interface 205, and the interface 206.

On the interface 204, a new control 2B02 appears at a location of the control 2B01, and the control 2B02 is continuously expanded. On the interface 205, the control 2B02 is continuously expanded to a size of a screen (which may not include a status bar). Finally, the electronic device displays the interface 205, where the interface 205 is a startup interface (StartingWindow) of the application. An expanding process of the control 2B02 is a type of animation in embodiments of this application, and the animation may be referred to as a startup animation.

Optionally, in some implementations of this application, the interface 205 may alternatively be a main interface of the application. In other words, the main interface of the application is displayed after the startup animation ends. The main interface may be an interface corresponding to MainActivity.

In the animation shown in FIG. 2A above, a developer of the application only needs to specify change logic of the control 2A01 in the animation, that is, modify a view property of the control 2A01 on each frame of interface in the animation process. Similarly, in the startup animation shown in FIG. 2B above, the developer of the application also needs to specify a property of the control 2B02 on each frame of interface.

For ease of description, it is considered that the control 2A01 corresponds to one view. In a more general case, the control 2A01 corresponds to a plurality of views.

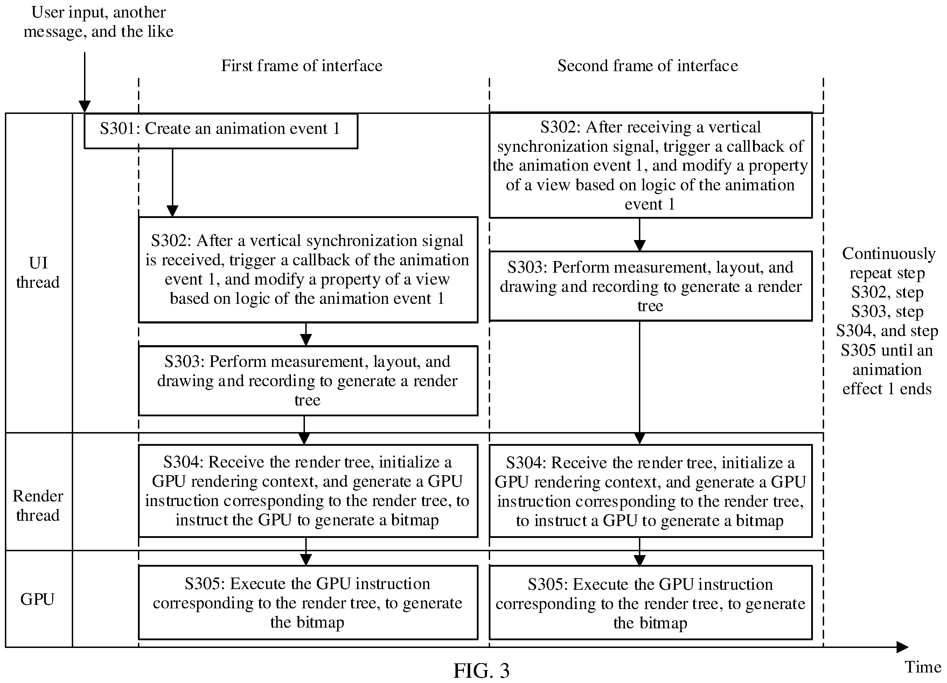

FIG. 3 is an example diagram of interface generation in an animation process according to an embodiment of this application.

As shown in FIG. 3, an interface generation process in the animation process may include the following five steps: step S301, step S302, step S303, step S304, and step S305. A process of generating a first frame of interface in the animation process may include: step S301, step S302, step S303, step S304, and step S305. A process of generating a non-first frame of interface in the animation process may include step S302, step S303, step S304, and step S305.

Step S301: Create an animation event 1.

The animation event may be created by a UI thread at any moment, and is related to logic of an application. For example, the animation event may be created after a user input, a message event sent by another thread or process to the application, or a network data update request is received. The animation event includes internal logic for implementing an animation effect, for example, an end condition of the animation effect and a modification amount of a property of a view in each frame within duration of the animation effect.

After the animation event is created, a callback is registered (equivalent to that the animation event is registered) with the UI thread. For example, the callback is registered with a choreographer (Choreographer) of the UI thread. The callback is used to trigger the UI thread to process the animation event and modify the property of the view based on logic of the animation event each time the UI thread receives a vertical synchronization signal (Vsync).

When the animation effect ends, the UI thread actively deregisters, based on the logic of the animation event, the callback of the animation event registered with the UI thread.

For example, in the scenario shown in FIG. 2A, after receiving the operation of tapping the control 2A01 by the user, the UI thread of the application generates an animation event, for example, an animation event 1. The animation event 1 is used to modify a property of an animation object after a vertical synchronization signal 1 is received. The animation object includes one or more views.

Optionally, in some implementations of this application, the animation object does not include a control whose change is sensed by the user. For example, in the scenario shown in FIG. 2A, the animation object is the control 2A01, and the changing control further includes the control 2A02, the control 2A03, and the control 2A04. The control 2A02, the control 2A03, and the control 2A04 are changing controls affected by the animation object. To be specific, the animation event does not modify properties of views corresponding to the control 2A02, the control 2A03, and the control 2A04. Instead, the UI thread of the application adjusts the properties of the views corresponding to the control 2A02, the control 2A03, and the control 2A04 based on a constraint relationship determined by using a layout. For adjusting, by the UI thread of the application, the properties of the views corresponding to the control 2A02, the control 2A03, and the control 2A04 based on the constraint relationship determined by using the layout, refer to the following descriptions of step S303. Details are not described herein.

S302: After the vertical synchronization signal is received, trigger a callback of the animation event 1, and modify a property of a view based on logic of the animation event 1.

After receiving the vertical synchronization signal, the UI thread of the application sequentially processes an input event (CALLBACK_INPUT), an animation event (CALLBACK_ANIMATION), a traversal event (CALLBACK_TRAVERSAL), and a commit event (CALLBACK_COMMIT).

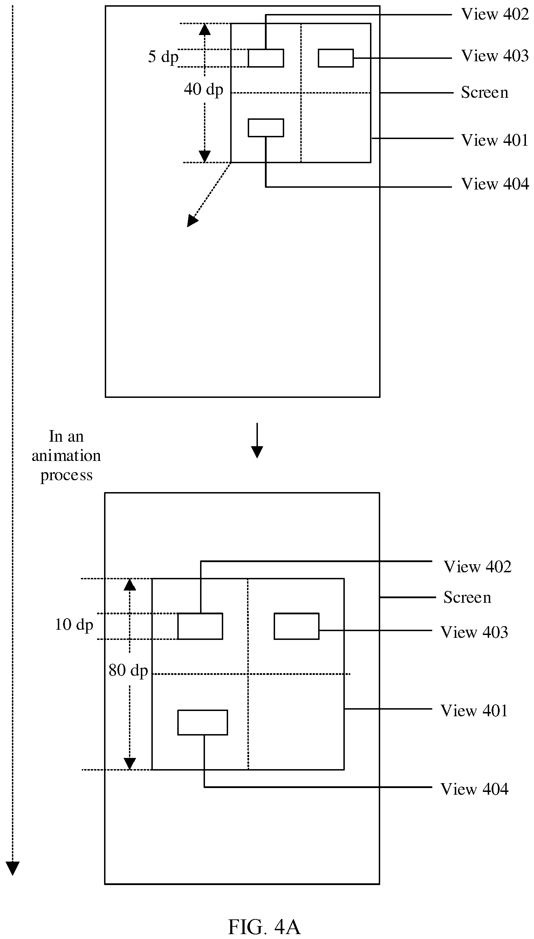

When processing the animation event (for example, doCallbacks (CALLBACK_ANIMATION)), the UI thread of the application modifies the property of the view based on the logic of the animation event. After code in the animation event 1 is executed, the property of the animation object is modified. For example, in the scenario shown in FIG. 2A, if a view corresponding to the control 2A01 is a view 401 in FIG. 4A, widths, heights, and locations of the view 401 before and after modification are different, where the view 401 is an animation object.

S303: Perform measurement, layout, and drawing and recording to generate a render tree.

The UI thread of the application executes a measurement method call, a layout method call, and a drawing method call. For specific content, refer to the text descriptions corresponding to FIG. 1. Details are not described herein again.

In the measurement method call and the layout method call, a size and a location of the view need to be re-determined based on a layout of the view.

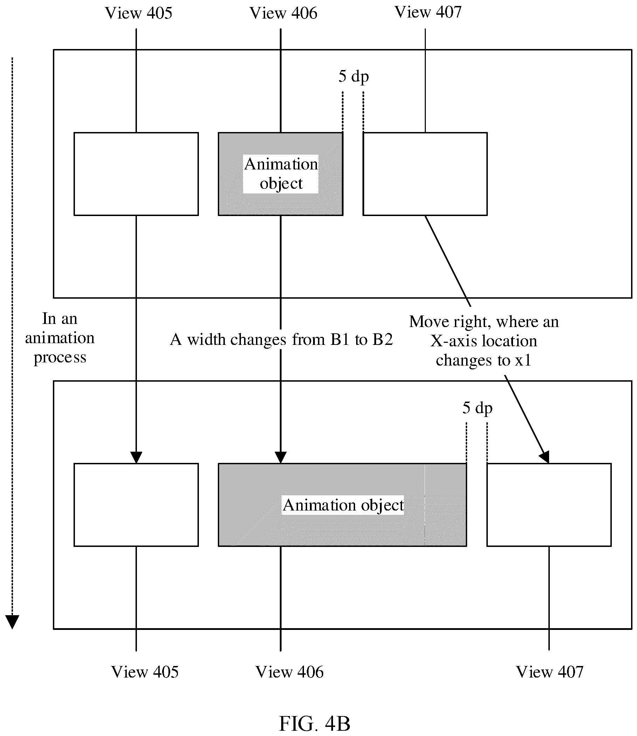

FIG. 4A and FIG. 4B are example diagrams in which the UI thread executes the measurement method call and the layout method call to determine a location and a size of a control of a non-animation object according to an embodiment of this application.

As shown in FIG. 4A, content shown in FIG. 4A corresponds to the scenario shown in FIG. 2A. The control 2A01 corresponds to the view 401, the control 2A02 corresponds to a view 402, the control 2A03 corresponds to a view 403, and the control 2A04 corresponds to a view 404.

In the animation process, if a property of the view 401 is modified by the UI thread of the application, for example, a length (height) of the view 401 is modified from 40 dp to 80 dp (when the length of the view 401 is 40 dp, a length of the view 402 is 5 dp), in a process in which the UI thread of the application executes the measurement method call and the layout method call, based on a constraint relationship that "a width of the view 402 is 1/8 of a width of the view 401", after the length of the view 401 changes to 80 dp, the UI thread of the application determines that the width of the view 402 changes to 10 dp.

Similarly, a width of the view 402, a length and a width of the view 403, and a width and a length of the view 404 that are not shown in FIG. 4A may also be determined by using a constraint relationship in a layout file (for example, an XML file).

Similarly, a location of the view 402, a location of the view 403, and a location of the view 404 that are not shown in FIG. 4A may also be determined by using the constraint relationship in the layout file (for example, the XML file).

As shown in FIG. 4B, an interface of the application includes a view 405, a view 406, and a view 407, and a horizontal (a width direction of the view is horizontal) spacing between the view 405, the view 406, and the view 407 is fixed (that the horizontal spacing is fixed is a constraint relationship). For example, the horizontal spacing is 5 dp.

If the logic of the animation event is to change a width of the view 406 (the view 406 is an animation object) from B1 to B2, where B2 is greater than B1 and B1 is greater than 0, after the UI thread of the application modifies the width of the view 406 to B2, a location of the view 407 further needs to be modified to ensure that the horizontal spacing between the view 406 and the view 407 is fixed. After the UI thread of the application executes the measurement method call and the layout method call, the UI thread of the application may determine a location change of the view 407. For example, the UI thread of the application may determine that an X-axis location of the view 407 changes to x1.

Therefore, in the animation process, after receiving the vertical synchronization signal, the UI thread further needs to perform measurement, layout, and drawing and recording. In other words, in a process of generating each frame of interface in the animation process, the UI thread and a render thread of the application further need to work continuously.

S304: Receive the render tree, initialize a GPU rendering context, and generate a GPU instruction corresponding to the render tree, to instruct a GPU to generate a bitmap.

After receiving the render tree, the render thread converts a drawing instruction list and a rendering property in a render node in the render tree into a corresponding GPU instruction.

Optionally, in some implementations of this application, the GPU instruction is a method call in an image processing library, or the GPU instruction is a method call in a rendering engine.

Optionally, in some implementations of this application, the GPU instruction is an instruction received by a GPU driver.

S305: Execute the GPU instruction corresponding to the render tree, to generate the bitmap.

After receiving the GPU instruction corresponding to the render tree, the GPU driver or the GPU executes the instruction to generate the bitmap.

With reference to the content shown in FIG. 3, FIG. 4A, and FIG. 4B, because interface changes in the animation process are continuous rather than abrupt, and render trees corresponding to different frames of interfaces in the animation process have a high similarity, GPU instructions corresponding to the different frames of interfaces in the animation process have a same part.

It should be noted that, in the animation process, because the GPU instructions corresponding to the different frames of interfaces have a same part, that is, the UI thread and the render thread of the application waste resources to generate same content in the animation process. This reduces an energy efficiency ratio of interface generation.

In view of this, embodiments of this application provide an interface generation method and an electronic device. According to the interface generation method provided in embodiments of this application, a GPU instruction or data corresponding to the GPU instruction is directly updated at a GPU driver layer or in an image processing library or a rendering engine, to generate a next frame of interface in an animation process. The GPU instruction or the data corresponding to the GPU instruction before the update may be referred to as a first rendering instruction, and a GPU instruction or data corresponding to the GPU instruction after the update may be referred to as a second rendering instruction.

Optionally, in some implementations of this application, an animation module in a view system may determine interface description information in the animation process, and then the animation module or another functional module generates update information based on the interface description information in the animation process. The update information is used to update the GPU instruction. The updating the GPU instruction is, for example, updating the first rendering instruction to the second rendering instruction. The interface description information in the animation process is used to describe a view whose property changes on each frame of interface except a first frame of interface in the animation process and the property of the view.

For example, in the animation process, if a location and a size of a first control change, a size and a location of the first control on each frame of interface are stored in the update information. After generating a first rendering instruction corresponding to a first frame of interface of the animation, an operating system may modify an input parameter of a method call that is for rendering the first control and that is in the first rendering instruction, to generate each frame of interface except the first frame of interface in the animation process.

Optionally, in some implementations of this application, the animation module may synchronize a location of a view to a UI thread of an application through an interface, so that the UI thread of the application can determine the location of the control.

Optionally, in some implementations of this application, the animation module may synchronize a texture (texture) from the UI thread of the application through the interface, to update a background map, a foreground map, or the like of the view. This is not limited herein. Alternatively, the texture resource synchronization operation may be performed by a GPU.

It may be understood that, according to the interface generation method provided in embodiments of this application, in the animation process, the UI thread does not need to execute a drawing and recording call, and the UI thread does not need to generate a new render tree. Further, a render thread does not need to convert a drawing operation into a GPU instruction. Therefore, an energy efficiency ratio of interface generation can be improved.

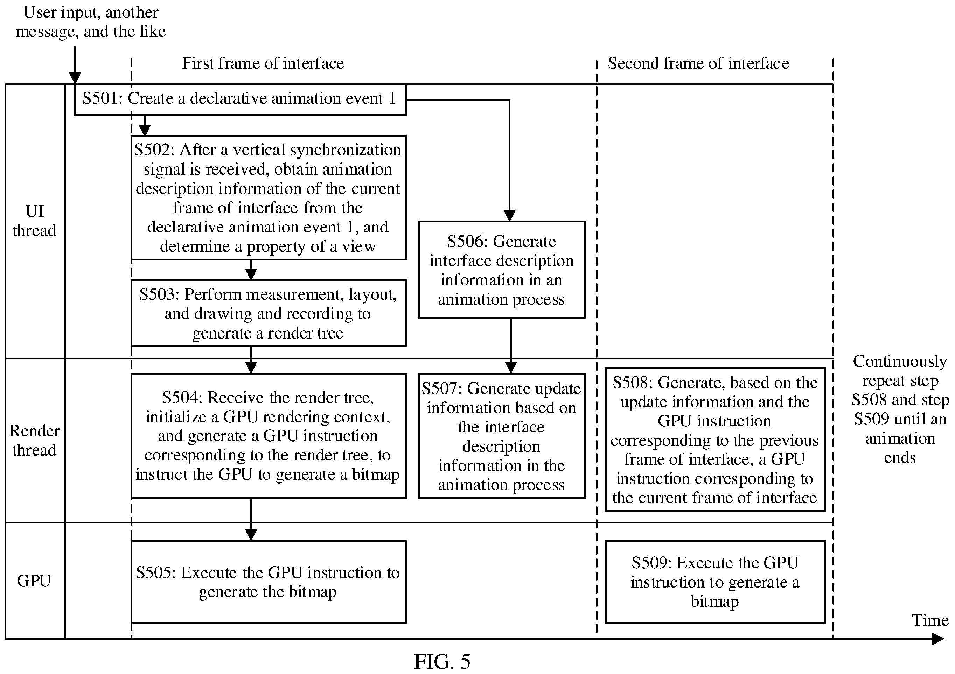

With reference to content shown in FIG. 5, the following describes, by using examples, a procedure of the interface generation method provided in embodiments of this application.

FIG. 5 is an example diagram of the procedure of the interface generation method according to an embodiment of this application.

As shown in FIG. 5, a process of generating an interface in an animation process according to the interface generation method provided in this embodiment of this application may include the following nine steps: step S501 to step S509. A process of generating a first frame of interface in the animation process may include step S501, step S502, step S503, step S504, and step S505. A process of generating a non-first frame of interface in the animation process may include step S506, step S507, step S508, and step S509.

Optionally, in some implementations of this application, step S506 and step S507 may be performed only in a process in which an application generates the first frame of interface in the animation process.

Optionally, in some implementations of this application, step S506 and step S507 may be performed in a process in which the application generates the non-first frame of interface in the animation process.

Optionally, in some implementations of this application, step S506 and step S507 may be performed in a process in which the application generates a second frame of interface in the animation process, and are not performed in a process of generating another frame of interface in the animation process.

Optionally, in some implementations of this application, step S507 and step S508 may be performed by another thread instead of being performed by a render thread. The another thread may not be a thread of the application, but a thread maintained by an operating system. For example, the another thread may be a thread of a unified rendering process. The unified rendering process (UniRender) is a process independent of the application, obtains a render tree of one or more applications in a cross-process communication manner, and after the render tree is composed, calls a GPU to generate a bitmap.

Whether step S507 and step S506 need to be repeatedly performed depends on content included in interface description information in the animation process. For example, if the content of the interface description information in the animation process indicates only a manner of modifying a property of a view on a current frame of interface, step S507 and step S506 need to be repeatedly performed. If the content of the interface description information in the animation process indicates a manner of modifying a property of a view on each frame of interface in the animation process, step S507 and step S506 may be performed only once.

S501: Create a declarative animation event 1.

The declarative animation event may be the same as or different from the animation event in FIG. 3. In this embodiment of this application, the declarative animation event is only used to distinguish from the animation event in FIG. 3 in terms of name, and does not refer to any substantive content.

The declarative animation event may be created at any moment, and is related to logic of the application. For example, the animation event may be created after a user input, a message event sent by another thread or process to the application, or a network data update request is received. The animation event includes internal logic for implementing an animation effect, for example, an end condition of the animation effect and a modification amount of a property of a view in each frame within duration of the animation effect.

Optionally, in some implementations of this application, the declarative animation event is different from the animation event in FIG. 3, where the declarative animation event needs to declare logic of an animation in the animation process. For example, declared content of the declarative animation event includes description information of an animation end interface and duration of the animation. For another example, declared content of the declarative animation event includes description information of an animation end interface and a step size of the animation. For another example, declared content of the declarative animation event includes duration of the animation and a step size of the animation. The step size of the animation may include a change amount of a property of a view between a current frame of interface and a previous frame of interface.

Optionally, in some implementations of this application, in an animation process (the non-first frame of interface), the declarative animation event may not register a callback. Because the declarative animation event has declared the logic of the animation in the animation process, that is, declared the manner of modifying the property of the view on each frame of interface in the animation process, in the animation process (the non-first frame of interface), there is no extra information that is in the declarative animation event and that needs to be processed by a UI thread of the application. Therefore, a callback that is registered before the animation event can be deregistered.

Optionally, in some implementations of this application, the declarative animation event is the same as the animation event in FIG. 3, and both indicate an animation object and a manner of modifying the animation object. In this case, the UI thread of the application needs to determine, based on the declarative animation object event, at least two of the description information of the animation end interface, the step size of the animation, and the duration of the animation.

Optionally, in some implementations of this application, the declarative animation event is the same as the animation event in FIG. 3. In this case, after receiving a vertical synchronization signal, the UI thread of the application may determine animation description information of the current frame of interface through measurement and layout.

S502: After the vertical synchronization signal is received, obtain the animation description information of the current frame of interface from the declarative animation event 1, and determine the property of the view.

After receiving the vertical synchronization signal, the UI thread of the application determines logic of an animation 1 from the declared content of the declarative animation event 1, and further determines the property of the view on the first frame of interface in the animation process.

Optionally, in some implementations of this application, after receiving the vertical synchronization signal, the UI thread of the application determines the description information of the animation end interface from the declared content of the declarative animation event 1, and further determines a property of the view on the animation end interface.

S503: Perform measurement, layout, and drawing and recording to generate a render tree.

For a process in which the UI thread of the application generates the render tree, refer to the text descriptions in FIG. 1. Details are not described herein again.

In step S502, if the UI thread of the application determines the property of the view on the first frame of interface in the animation process, the render tree is a render tree corresponding to the first frame of interface in the animation process.

In step S502, if the UI thread of the application determines the property of the view on the animation end interface, the render tree is a render tree corresponding to the animation end interface.

In step S502, if the UI thread of the application determines the description information of the end interface, the render tree is a render tree corresponding to the end interface. In this case, a GPU instruction corresponding to the end interface needs to be updated to a GPU instruction of the first frame of interface in the animation. For a method for updating the GPU instruction, refer to text descriptions in the following step S507 and step S508. Details are not described herein.

S504: Receive the render tree, initialize a GPU rendering context, and generate a GPU instruction corresponding to the render tree, to instruct the GPU to generate a bitmap.

For a process in which the render thread receives the render tree, initializes the GPU rendering context, and generates the GPU instruction corresponding to the render tree, to instruct the GPU to generate the bitmap, refer to the text descriptions in FIG. 1. Details are not described herein again.

S505: Execute the GPU instruction to generate the bitmap.

For a process in which a GPU driver executes the GPU instruction to generate the bitmap, refer to the text descriptions in FIG. 1. Details are not described herein again.

Optionally, in some implementations of this application, the GPU instruction may be classified into a resource (for example, uniform, a texture (texture), or a mesh (mesh)) and a pipeline (pipeline) based on functions. The pipeline (pipeline) includes a shader (shader) and the like. A process in which the GPU executes the GPU instruction may alternatively be understood as that the GPU executes a GPU rendering task (for example, job desc). In other words, the GPU rendering task may be a specific operation used to call the GPU to perform rendering to generate the bitmap.

The pipeline may also be referred to as a render pipeline, a flowline, a render flowline, an image pipeline, or an image flowline.

The pipeline is a process in which the GPU generates a bitmap based on a resource and a command sent by the CPU. In this process, a series of preset method calls are used, such as the shader and rasterization. The shader may be a type of special function pointed to by a graphics hardware device (for example, the GPU), namely, a small program specially compiled for the GPU.

Herein, uniform is a limited read-only variable in an image processing library, and is transferred to the image processing library after a value is assigned by the application; and uniform may store parameters such as colors, transparency, and size ratios of different views on the current frame of interface. After uniform is bound to the pipeline, uniform may participate in the process that corresponds to the pipeline and that is of calling the GPU to generate the bitmap.

S506: Generate the interface description information in the animation process.

The UI thread of the application needs to generate the interface description information in the animation process. The interface description information in the animation process is used to describe a view whose property changes on each frame of interface except the first frame of interface in the animation process and the property of the view; or the interface description information in the animation process includes a view whose property changes on each frame of interface in the animation process and the property of the view.

Optionally, in some implementations of this application, the interface description information in the animation process includes a property of a view on each frame of interface in the animation process.

Optionally, in some implementations of this application, the interface description information in the animation process includes a change amount of a property of a view in the animation process.

Optionally, in some implementations of this application, the interface description information may not include values of properties such as a length and a width of the view. It may be understood that the properties such as the length and the width of the view are parameters configured for convenience of an application developer. However, in a rendering process, an input parameter of a drawing operation may not be the properties such as the length and the width of the view. For example, for a drawing operation of drawing a rectangle, a required input parameter may be a vertex location. Therefore, the interface description information may not include the values of the properties such as the length and the width of the view.

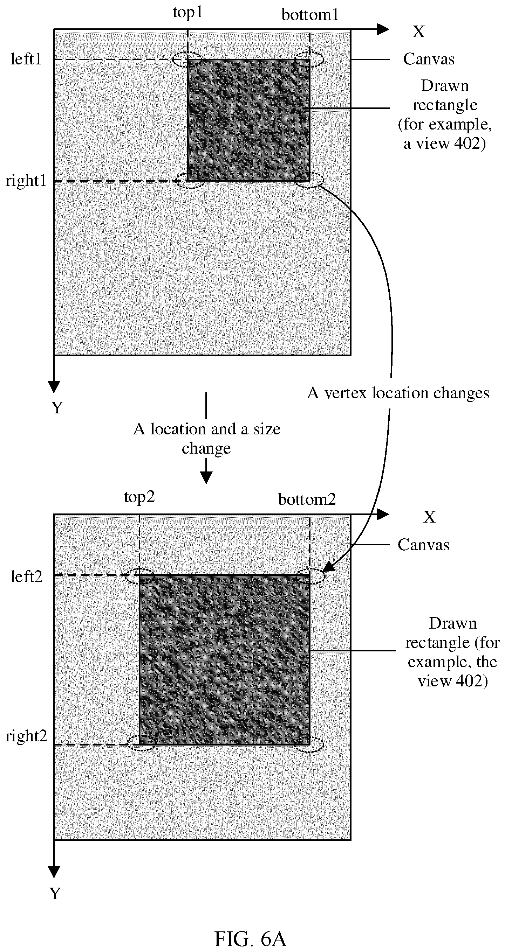

For example, the interface description information in the animation process includes vertex location change information of a control 2A01, where the vertex location change information may be used to determine a size and a location of the control 2A01. For the vertex location, refer to text descriptions corresponding to the following FIG. 6A.

If the declarative animation event (equivalent to the animation event in FIG. 3) specifies only a property change of the animation object in the animation process, the UI thread of the application needs to determine, with reference to content of the animation event, the view whose property changes. In addition, the UI thread of the application further needs to determine a value of the property of the view whose property changes on each frame of interface except the first frame of interface in the animation process. In this case, the UI thread of the application further needs to execute a layout method call and a measurement method call after receiving the vertical synchronization signal.

Optionally, in some implementations of this application, the interface description information in the animation process is only used to determine a view whose property changes on a next frame of interface and the property of the view. If the interface description information in the animation process is only used to determine the view whose property changes on the next frame of interface and the property of the view, in the animation process, after receiving the vertical synchronization signal, the UI thread of the application needs to generate the interface description information in the animation process, namely, description information of the current frame of interface.

Optionally, in some implementations of this application, the UI thread of the application may traverse views to determine the interface description information in the animation process. In other words, in this case, the interface description information in the animation process is the description information of the current frame of interface.

S507: Generate update information based on the interface description information in the animation process.

After an animation module generates the interface description information in the animation process, the animation module may generate the update information based on the interface description information in the animation process, and transfer the update information to a rendering engine and the image processing library.

The update information may be a Skia library-level instruction, or a Vulkan library, OpenGL ES library, or Metal library-level instruction, or an instruction that can be identified and executed by the GPU driver.

The update information may be information that is on the current frame of interface and that is used to update a resource in the GPU instruction. In this embodiment of this application, the update information is used to update a GPU instruction of a previous frame of interface (or the GPU instruction of the first frame of interface of the animation) to a GPU instruction corresponding to the current frame of interface.

Optionally, in some implementations of this application, the update information is used to convert a Skia library, Vulkan library, OpenGL ES library, or Metal library-level instruction corresponding to the previous frame of interface into a Skia library, Vulkan library, OpenGL ES library, or Metal library-level instruction corresponding to the current frame of interface. For a specific conversion process, refer to text descriptions of the following step S508. Details are not described herein.

Optionally, in some implementations of this application, the update information may be implemented by using uniform and an additional GPU task. The GPU task may be referred to as an update task. The update task may be configured in the GPU driver. The update task may be used to receive and parse the interface description information in the animation process, and update a value in uniform based on the interface description information in the animation process.

Optionally, in some implementations of this application, if the update information includes description information of each frame of interface in the animation process, the update information may be directly used in the process of generating the first frame of interface in the animation process, and further directly used in a subsequent interface generation process. For example, in a process of generating an I^{th} frame of interface, content that is in the update information and that corresponds to description information of the I^{th} frame of interface takes effect, and is used in a process in which the GPU performs rendering to generate a bitmap.

Optionally, in some implementations of this application, if the interface description information in the animation process includes only the description information of the current frame of interface, after the UI thread continuously generates, in the animation process, the interface description information in the animation process, the UI thread or the render thread further needs to continuously refresh content of the update information.

S508: Generate, based on the update information and the GPU instruction corresponding to the previous frame of interface, the GPU instruction corresponding to the current frame of interface.

The GPU or the GPU driver updates, based on the update information, the GPU instruction corresponding to the previous frame of interface to the GPU instruction corresponding to the current frame of interface.

Optionally, in some implementations of this application, when the update information is a Skia library, Vulkan library, OpenGL ES library, or Metal library-level instruction, the render thread updates the GPU instruction to a corresponding Skia library, OpenGL ES library, Vulkan library, or Metal library-level instruction.

In the animation process, a change between two adjacent frames of interfaces may be a location change, a size change, a map change, a color change, a transparency change, and/or the like of a view on the interfaces. Correspondingly, in the animation process, the pipeline in the GPU instruction may not change, and only the resource in the GPU instruction changes.

The following describes several manners of updating the GPU instruction or equivalently updating the GPU instruction.

Optionally, in some implementations of this application, a drawing operation of the previous frame of interface, the first frame of interface, or a last frame of interface may be partially or completely updated by the rendering engine to a drawing operation of the current frame of interface.

FIG. 6A is an example diagram of updating a GPU instruction by updating a vertex location according to an embodiment of this application.

For example, in the scenario shown in FIG. 2A, a change of the view 401 is a size change and a location change. If the view 401 is a rectangle, in an i^{th} frame of the animation, a drawing operation corresponding to the view 401 includes drawrect(rect r, paint p), where i is greater than 1, r is a rectangle (rect) object, p is a paint (paint) object, r includes a parameter c, and the parameter c is used to determine a location of the rectangle, for example, c=(bottom1, left1, right1, top1).

The update information may be used at a vertex location of a drawing operation corresponding to the previous frame of interface. For example, the update information makes c=c.*T, where .* is matrix point multiplication. Herein, T=(bottom2/bottom1, left2/left1, right2/right1, top2/top1), and T may be determined based on the interface description information in the animation process.

It should be noted that T=(bottom2/bottom1, left2/left1, right2/right1, top2/top1) does not mean that the animation description information definitely includes a vertex location of the view 402 in an (i+k)^{th} frame of the animation. This is merely an example for description herein. If the animation description information includes the vertex location of the view 402 in the (i+k)^{th} frame of the animation, a value may be directly assigned to c.

In the (i+k)^{th} frame of the animation, a drawing operation corresponding to the view 401 includes drawrect(rect r, paint p), and a value of the parameter c in r changes to c=(bottom2, left2, right2, top2), where k is greater than 0.

Optionally, in some implementations of this application, a value of an input parameter degree of a drawing operation canvas.rotate (degree) may be modified, to rotate the view. The drawing operation for rotating the view is not limited to the drawing operation canvas.rotate().

Optionally, in some implementations of this application, a value of an input parameter alpha of a drawing operation paint.setalpha (alpha) may be modified, to adjust transparency of the view. The drawing operation for changing the transparency of the view is not limited to the drawing operation paint.setalpha.

Optionally, in some implementations of this application, a value of an input parameter color of a drawing operation paint.setcolor (color) may be modified, to adjust a color of the view. The drawing operation for changing the color of the view is not limited to the drawing operation paint.setcolor.

In the foregoing optional implementations, a change of the vertex location, a change of the input parameter degree, a change of the input parameter alpha, and a change of the input parameter color may all be the update information in the implementations of this application. In other words, uniform may carry vertex locations, input parameters degree, input parameters alpha, and input parameters color of different views in the animation process.

For example, in uniform, degree=[0°, 10°, 20°, 30°]. For another example, degree=[0], and the foregoing update task is used to increase a value of degree by 10° each time before a bitmap is generated. After the GPU driver executes the GPU rendering task, a rotation angle of a drawn graph increases by 10°.

Optionally, in some implementations of this application, the GPU instruction of the previous frame of interface may be updated at a GPU driver layer to the GPU instruction of the current frame of interface.

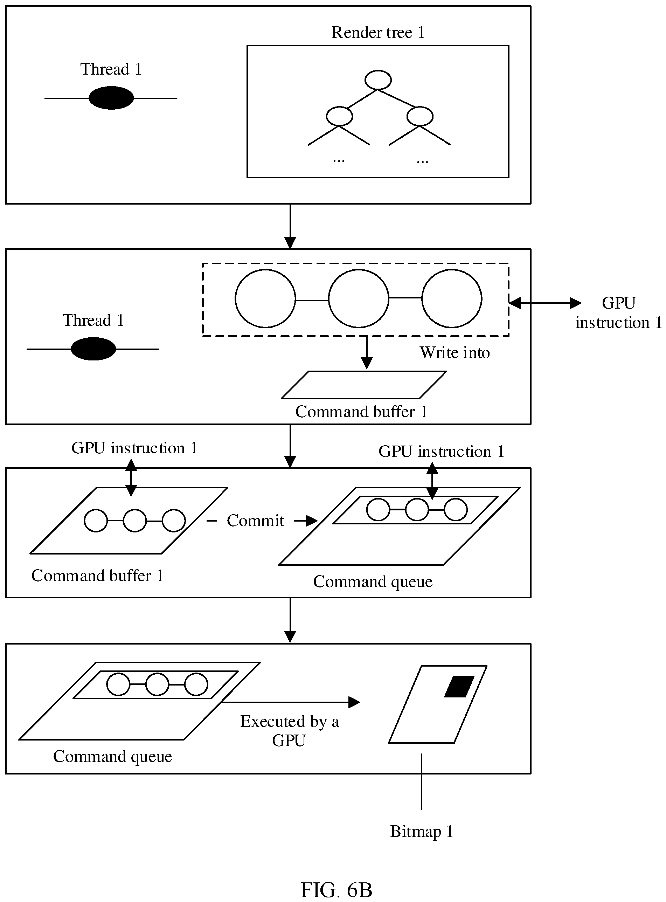

FIG. 6B to FIG. 6E are other example diagrams of updating a GPU instruction by updating a vertex location according to an embodiment of this application.

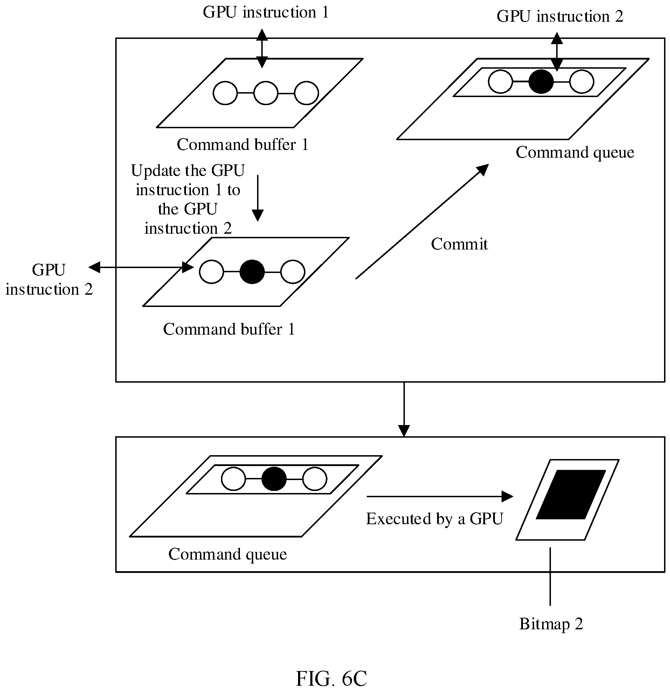

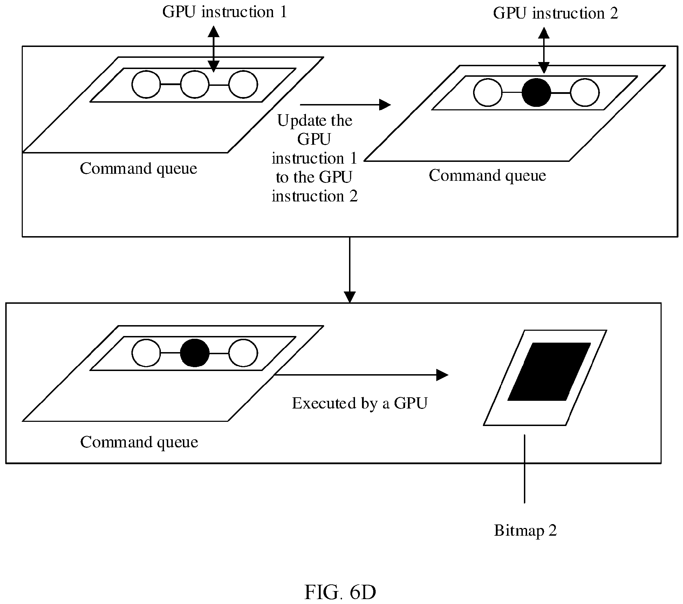

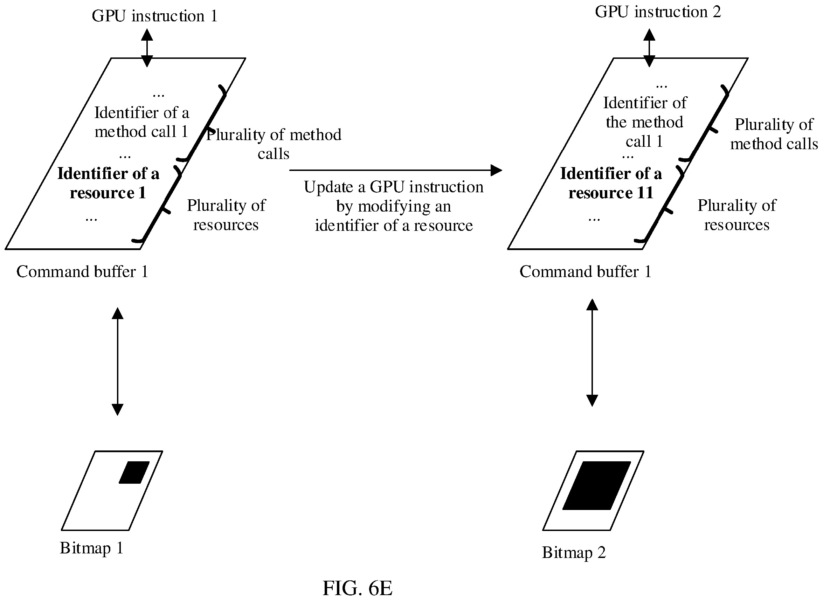

FIG. 6B describes an example of the process of generating the first frame of interface of the animation, FIG. 6C and FIG. 6D describe examples of a process of generating the non-first frame of interface of the animation, and FIG. 6E describes an example of a process of updating a GPU instruction.

As shown in FIG. 6B, in the process of generating the first frame of interface of the animation, the application first generates a render tree, for example, a render tree 1 in FIG. 6B. Then, after receiving the render tree 1, a thread 1 converts the render tree into a GPU instruction 1, and writes the GPU instruction 1 into a command buffer (commandbuffer), for example, a command buffer 1 in FIG. 6B. The thread 1 may be a render thread. Then, after all GPU instructions are written to the command buffer 1, data in the command buffer 1 is committed to a command queue (commandqueue). Finally, the GPU executes a command in the command queue to generate a bitmap 1, where the bitmap 1 is a bitmap corresponding to the first frame of interface of the animation.

The command buffer may be obtained by applying from a command buffer pool (commandbuffer pool).

As shown in FIG. 6C, in the process of generating the non-first frame of interface of the animation, the application or the operating system may update the GPU instruction 1 in the command buffer 1 to a GPU instruction 2, and commit the data in the command buffer 1 to the command queue after the update. Then, the GPU executes a command in the command queue to generate a bitmap 2, where the bitmap 2 is a bitmap corresponding to the non-first frame of interface of the animation.

As shown in FIG. 6D, in the process of generating the non-first frame of interface of the animation, the application or the operating system may update the GPU instruction 1 in the command queue to a GPU instruction 2, and then the GPU executes a command in the command queue to generate a bitmap 2, where the bitmap 2 is a bitmap corresponding to the non-first frame of interface of the animation.

As shown in FIG. 6E, in the process of generating the non-first frame of interface of the animation, because the GPU instruction may be divided into two parts: an identifier of a method call and an identifier of a resource, the GPU instruction may be updated by updating the identifier of the resource. The method call may be equivalent to or may belong to the foregoing pipeline. In the process of updating the GPU instruction, only the identifier of the resource may be updated. The resource may be equivalent to an input parameter of the method call, or the resource may be equivalent to a variable, a fixed value, or the like that needs to be used in method call.

For example, in FIG. 6E, in the process of updating the GPU instruction 1 to the GPU instruction 2, an identifier of a resource 1 is modified to an identifier of a resource 11. If the identifier of the resource 1 in the GPU instruction 1 is used in a method call 1, the identifier of the resource 11 in the GPU instruction 2 is used in the method call 1. With reference to the content shown in FIG. 6A, the method call 1 is a call for drawing a rectangle, the resource 1 may be a vertex location 1, for example, (bottom1, left1, right1, top1), and the resource 11 may be a vertex location 2, for example, (bottom2, left2, right2, top2). In this case, the GPU instruction 1 is used to draw a rectangle at the vertex location 1, and the GPU instruction 2 is used to draw a rectangle at the vertex location 2, to implement an interface change shown in FIG. 6A.

Optionally, in some implementations of this application, the method call part of the GPU instruction, namely, a pipeline part, does not change before and after the update.

It may be understood that, from the second frame of interface of the animation to the end of the animation, the UI thread or the render thread of the application does not need to prepare a computing resource for an interface change, and interface load in the animation process is borne by the GPU.

S509: Execute the GPU instruction to generate the bitmap.

The GPU executes the GPU instruction to generate the bitmap of the application on the current frame of interface. The bitmap is stored in framebuffer of Buffer Queue, and is further used in layer composition for display.

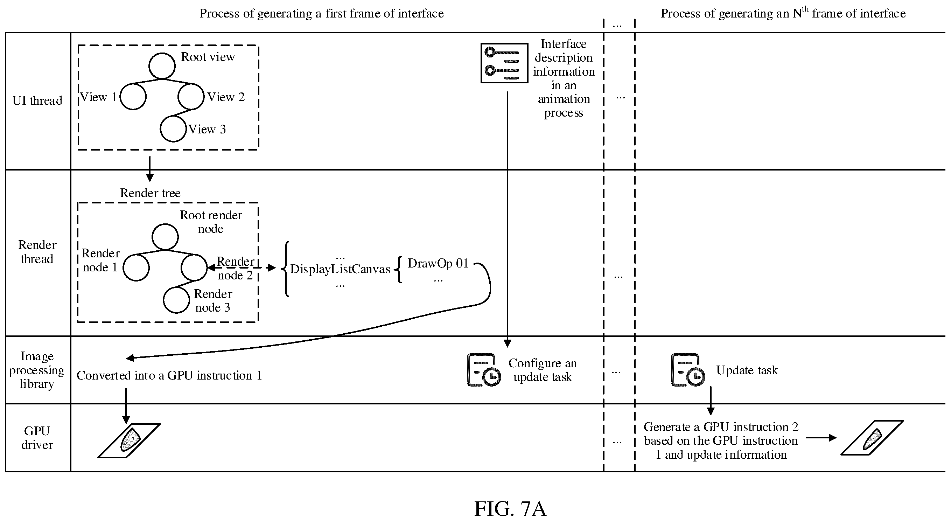

FIG. 7A to FIG. 7D are example diagrams of a data procedure in the interface generation method according to an embodiment of this application.

As shown in FIG. 7A, in the process of generating the first frame of interface of the animation, the UI thread of the application traverses the views to generate a render tree corresponding to the views. In addition, the UI thread of the application determines the interface description information in the animation process.

After receiving the render tree, the render thread converts the render tree into the GPU instruction 1 through the image processing library, where the GPU instruction 1 is a GPU instruction corresponding to a bitmap of the application on the first frame of interface. After receiving the GPU instruction 1, the GPU generates the bitmap 1.

The UI thread of the application configures an update task for the GPU driver through the image processing library. The update task may be used to receive the interface description information in the animation process. The GPU driver may generate the update information based on the update task.

In the process of generating the non-first frame of interface of the animation, for example, in a process of generating an N^{th} frame of interface of the animation, the GPU driver generates the GPU instruction 2 based on the update information and the GPU instruction 1, and then generates a bitmap based on the GPU instruction 2. Alternatively, in a process of executing the update task, the GPU driver generates the GPU instruction 2 based on the GPU instruction 1. For a process of generating the GPU instruction 2, refer to the text descriptions in FIG. 6A to FIG. 6E. Details are not described herein again.

In a process of generating an (N+1)^{th} frame of interface of the animation, the GPU driver may generate a GPU instruction 3 based on the GPU instruction 1 and the update information, and then generate a bitmap based on the GPU instruction 3. The GPU instruction 3 is an instruction corresponding to a bitmap of the application on the (N+1)^{th} frame of interface of the animation.

Alternatively, in a process of generating an (N+1)^{th} frame of interface of the animation, the GPU driver may generate a GPU instruction 3 based on the GPU instruction 2 and the update information, and then generate a bitmap based on the GPU instruction 3. The GPU instruction 3 is an instruction corresponding to a bitmap of the application on the (N+1)^{th} frame of interface of the animation.

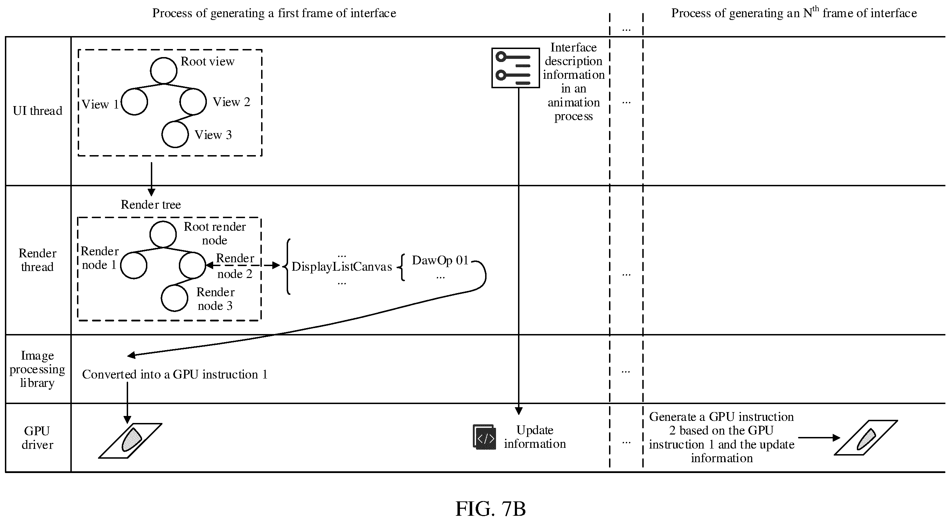

As shown in FIG. 7B, in the process of generating the first frame of interface of the animation, the UI thread of the application traverses the views to generate a render tree corresponding to the views. In addition, the UI thread of the application determines the interface description information in the animation process.

After receiving the render tree, the render thread converts the render tree into the GPU instruction 1 through the image processing library, where the GPU instruction 1 is a GPU instruction corresponding to a bitmap of the application on the first frame of interface.

The UI thread of the application configures the update information through the image processing library based on the interface description information in the animation process, and transfers the update information to the GPU driver.

In the process of generating the non-first frame of interface of the animation, for example, in a process of generating an N^{th} frame of interface of the animation, the GPU driver generates the GPU instruction 2 based on the update information and the GPU instruction 1, and then generates a bitmap based on the GPU instruction 2. For a process of generating the GPU instruction 2, refer to the text descriptions in FIG. 6A to FIG. 6E. Details are not described herein again.

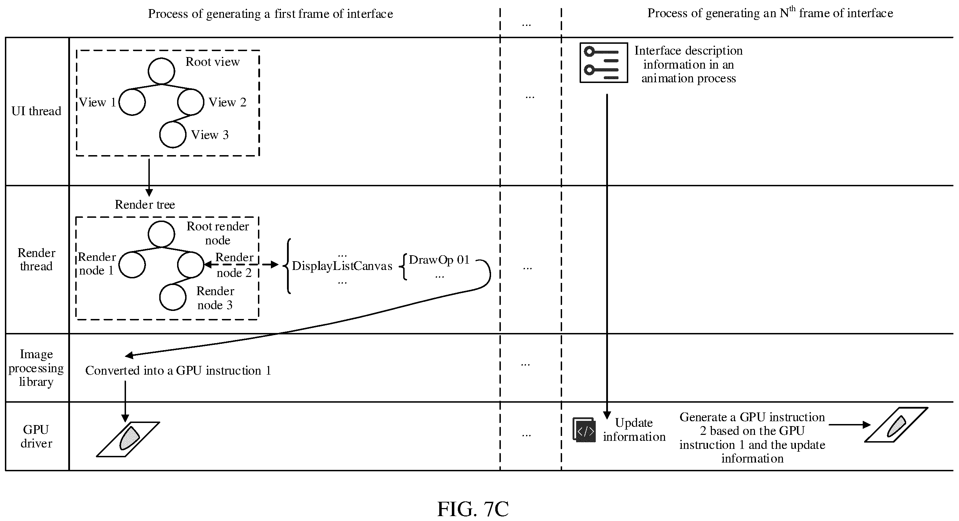

As shown in FIG. 7C, in the process of generating the first frame of interface of the animation, the UI thread of the application traverses the views to generate a render tree corresponding to the views. In addition, the UI thread of the application determines the interface description information in the animation process.

After receiving the render tree, the render thread converts the render tree into the GPU instruction 1 through the image processing library, where the GPU instruction 1 is a GPU instruction corresponding to a bitmap of the application on the first frame of interface. After receiving the GPU instruction 1, the GPU generates the bitmap.

In the process of generating the non-first frame of interface of the animation, for example, in a process of generating an N^{th} frame of interface of the animation, the UI thread of the application determines the interface description information in the animation process, that is, determines the description information of the current frame of interface, and converts the interface description information into the update information through the image processing library. The GPU driver generates the GPU instruction 2 based on the update information and the GPU instruction 1, and then generates a bitmap based on the GPU instruction 2.

Optionally, in some implementations of this application, after the UI thread of the application determines the interface description information in the animation process, that is, after determining the description information of the current frame of interface, the UI thread of the application may configure a GPU task for the GPU driver through the image processing library, as shown in FIG. 7A. The GPU task is used to refresh the update information.

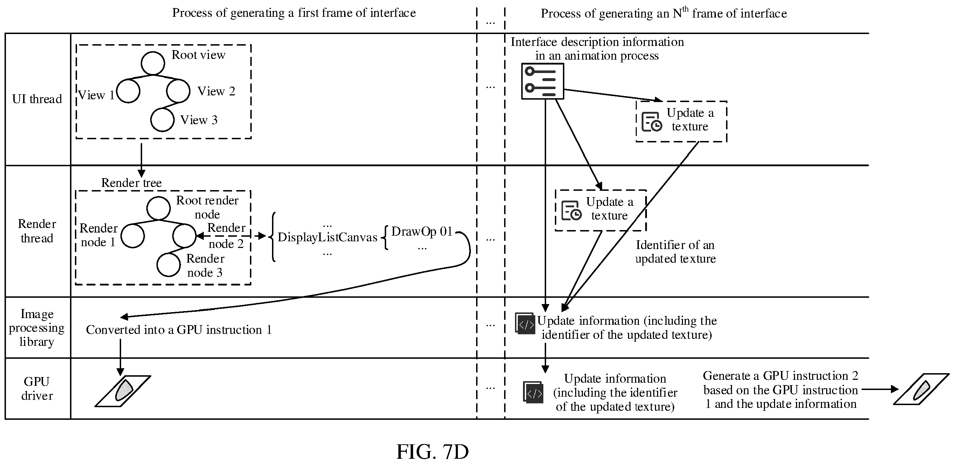

As shown in FIG. 7D, which is different from the content shown in FIG. 7C, if the animation relates to texture update, the UI thread and the render thread of the application may write an identifier of an updated texture into the update information after the texture update.

Optionally, in some implementations of this application, the application may establish a new thread responsible for the texture update.

Optionally, in some implementations of this application, if the interface description information in the animation process includes description information of a plurality of frames of interfaces in the animation process, the application may pre-load a plurality of textures into a memory, and store identifiers of the plurality of textures in the update information.

Optionally, in some implementations of this application, if the interface description information in the animation process includes only the description information of the current frame of interface in the animation process, the application needs to load a texture into a memory in the process of generating each frame of interface, and stores an identifier of the texture in the update information.

It may be understood that, in the interface generation method provided in embodiments of this application, in the process of generating the non-first frame of interface of the animation, the render thread does not need to convert the render tree into the GPU instruction. This reduces CPU load in the interface generation process, and can improve an energy efficiency ratio of interface generation in the animation process.

Because the interface generation method provided in embodiments of this application can improve the energy efficiency ratio of interface generation in the animation process, the interface generation method provided in embodiments of this application may be applied to a three-dimensional (pseudo three-dimensional) animation field.

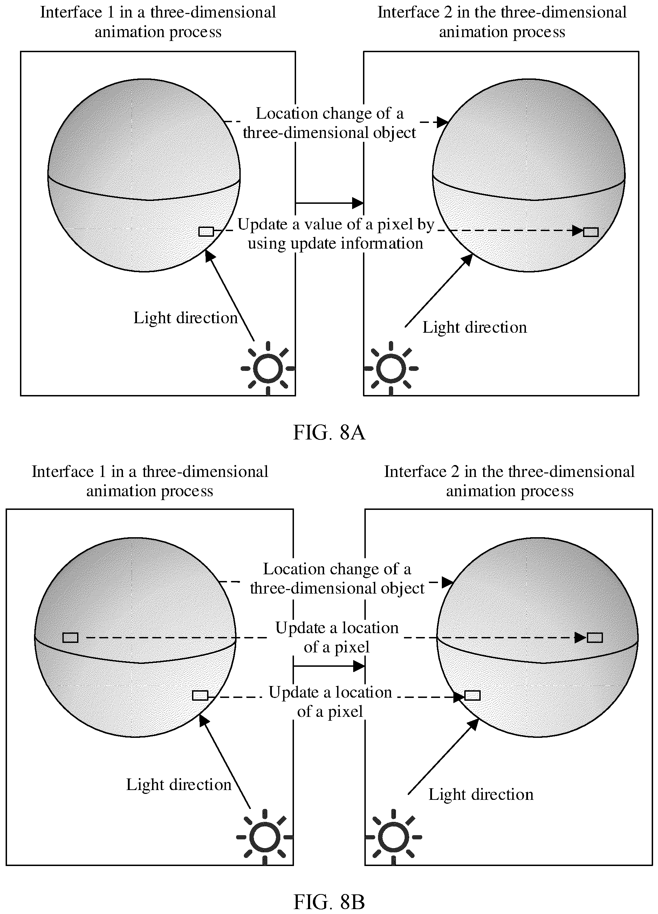

FIG. 8A and FIG. 8B are example diagrams of implementing a three-dimensional animation method according to an embodiment of this application.

As shown in FIG. 8A, there is a spherical object on an interface 1 in a three-dimensional animation process and an interface 2 in the three-dimensional animation process. When a light direction is not moved (a light source location is not moved), a spatial location change of the spherical object causes a change of light intensity on a surface of the spherical object.

To be specific, pixels on the surface of the spherical object on the interface 1 in the three-dimensional animation process are different from pixels on the surface of the spherical object on the interface 1 in the three-dimensional animation process, and are not in a simple translation, rotation, or color change relationship.

In this embodiment of this application, a rendering engine provides a user-defined shader for an application. The user-defined shader has built-in pixels of any frame of interface in one or more three-dimensional animation processes or a drawing operation (for example, a skia library-level instruction) for generating the interface.

Because the shader is used for color calculation, update information is also used in a color calculation process. A color change in one or more built-in three-dimensional animations (as shown in FIG. 8A, the surface of the spherical object has different lightness due to a change of the light direction) may be determined based on the update information.

Because a value of a pixel on a next frame of interface (or a drawing operation for generating the next frame of interface) in the three-dimensional animation may be determined based on the update information, there is no need to store a complete three-dimensional model in a GPU and the GPU does not need to determine the value of the pixel on the next frame of interface in the three-dimensional animation based on the three-dimensional model.

For example, it is assumed that a pixel matrix of the spherical object on the interface 1 in the three-dimensional animation process is *M*₁, a pixel matrix of the spherical object on the interface 2 in the three-dimensional animation process is *M*₂, and the update information includes a transformation matrix *T*₁. In this case, *M*₂ may be obtained through calculation by using *M*₂ = *T*1**M*₁*.*

The transformation matrix *T*₁ is a two-dimensional matrix, and a calculation amount of the two-dimensional matrix is far less than a calculation amount of the three-dimensional model, so that a calculation amount of interface generation in the three-dimensional animation process can be reduced.

Optionally, in some implementations of this application, the update information, for example, *T*₁, may be determined offline and stored on an electronic device.

Optionally, in some implementations of this application, as shown in FIG. 8B, a location of a pixel (a location of a drawing operation on a canvas) may alternatively be updated, to generate a frame of interface in the three-dimensional animation.

For example, it is assumed that a pixel matrix of the spherical object on the interface 1 in the three-dimensional animation process is *M*₁, a pixel matrix of the spherical object on the interface 2 in the three-dimensional animation process is *M*₂, and the update information includes a transformation function *f*₁(). In this case, *M*₂ may be obtained through calculation by using *M*₂ *= f₁*(*M₁*). Herein, *f*₁() may be used to change a location of an internal element of the pixel matrix in the matrix.

It may be understood that, because a three-dimensional model of an object in the three-dimensional animation does not need to be stored, computing complexity of the three-dimensional animation may be reduced from three dimensional to two dimensional, and memory space may be saved, to improve an energy efficiency ratio of interface generation.

The following describes a hardware structure and a software architecture of an electronic device provided in an embodiment of this application.

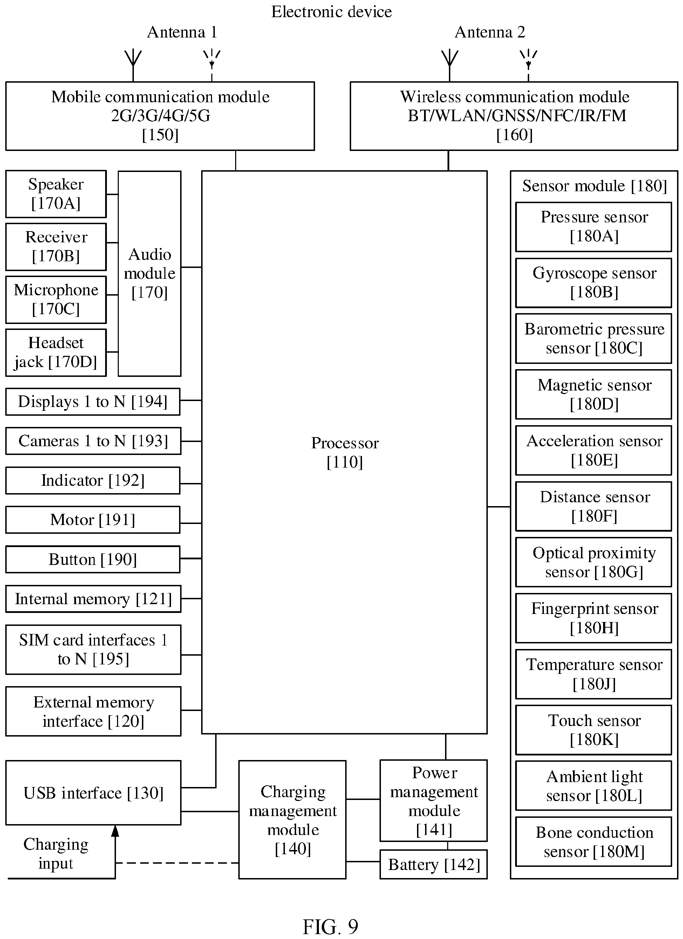

FIG. 9 is an example diagram of the hardware structure of the electronic device according to an embodiment of this application.

The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart household device, and/or a smart city device. A specific type of the electronic device is not limited in embodiments of this application.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device. In some other embodiments of this application, the electronic device may include more or fewer components than those shown in the figure, or some components may be combined, or some components may be split, or there may be a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus, and converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral device like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device. The processor 110 communicates with the display 194 through the DSI interface, to implement a display function of the electronic device.

The GPIO interface may be configured through software. The GPIO interface may be configured for control signals or data signals. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, a MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device, or may be used for data transmission between the electronic device and a peripheral device, or may be configured to connect to a headset for playing an audio through the headset. The interface may be further configured to connect to another electronic device, for example, an AR device.

It may be understood that an interface connection relationship between the modules illustrated in this embodiment of the present invention is merely an example for description, and does not constitute any limitation on a structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from the charger. The charger may be a wireless charger or a wired charger. In some wired charging embodiments, the charging management module 140 may receive a charging input from a wired charger through the USB interface 130. In some wireless charging embodiments, the charging management module 140 may receive wireless charging input through a wireless charging coil of the electronic device. The charging management module 140 supplies power to the electronic device through the power management module 141 while charging the battery 142.

The power management module 141 is configured to connect the battery 142, the charging management module 140, and the processor 110. The power management module 141 receives an input of the battery 142 and/or an input of the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution that is for wireless communication including 2G/3G/4G/5G and the like and that is used in the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide wireless communication solutions applied to the electronic device, including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device implements a display function through the GPU, the display 194, the application processor, and the like. The GPU is a microprocessor for image processing, and connects the display 194 to the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, quantum dot light-emitting diodes (quantum dot light-emitting diodes, QLED), or the like. In some embodiments, the electronic device may include one or N displays 194, where N is a positive integer greater than 1.

The electronic device may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device may include one or N cameras 193, where N is a positive integer greater than 1.

The digital signal processor is configured to process a digital signal, and may process another digital signal in addition to the digital image signal. For example, when the electronic device selects a frequency, the digital signal processor is configured to perform Fourier transform and the like on frequency energy.

The video codec is configured to compress or decompress a digital video. The electronic device may support one or more types of video codecs. Therefore, the electronic device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device, for example, image recognition, facial recognition, voice recognition, and text understanding, may be implemented through the NPU.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, where for example, a 5th generation DDR SDRAM is usually referred to as a DDR5 SDRAM), and the like.

The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia card, eMMC), and the like based on a storage specification.

The random access memory may be directly read and written by the processor 110, may be configured to store an executable program (for example, machine instructions) of an operating system or another running program, may be further configured to store data of a user and an application, and the like.

The non-volatile memory may also store an executable program, data of a user and an application, and the like, and may be loaded to the random access memory in advance for the processor 110 to directly perform reading and writing.

The external memory interface 120 may be configured to connect to an external non-volatile memory, to extend a storage capability of the electronic device. The external non-volatile memory communicates with the processor 110 through the external memory interface 120, to implement a data storage function. For example, files such as music and videos are stored in the external non-volatile memory.

The electronic device may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device may listen to music or answer a hands-free call through the speaker 170A.

The receiver 170B, also referred to as an "earpiece", is configured to convert an electrical audio signal into a sound signal. When a call is answered or voice information is received by using the electronic device, the receiver 170B may be put close to a human ear to receive a voice.

The microphone 170C, also referred to as a "mike" or a "mic", is configured to convert a sound signal into an electrical signal. When making a call or sending voice information, the user may make a sound near the microphone 170C through the mouth of the user, to input a sound signal to the microphone 170C. At least one microphone 170C may be disposed in the electronic device. In some other embodiments, two microphones 170C may be disposed in the electronic device, to collect a sound signal and further implement a noise reduction function. In some other embodiments, three, four, or more microphones 170C may alternatively be disposed in the electronic device, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device determines a pressure strength based on a capacitance change. When a touch operation is performed on the display 194, the electronic device detects intensity of the touch operation through the pressure sensor 180A. The electronic device may calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messaging application icon, an instruction for viewing an SMS message is performed. When a touch operation whose touch operation intensity is greater than or equal to the first pressure threshold is performed on the Messaging application icon, an instruction for creating a new SMS message is performed.

The gyroscope sensor 180B may be configured to determine a motion posture of the electronic device. In some embodiments, angular velocities of the electronic device around three axes (namely, axes x, y, and z) may be determined by using the gyroscope sensor 180B. The gyroscope sensor 180B may be configured to implement image stabilization during photographing. For example, when a shutter is pressed, the gyroscope sensor 180B detects a jitter angle of the electronic device, calculates, based on the angle, a distance for which a lens module needs to compensate, and enables the lens to offset jitter of the electronic device through reverse motion, to implement image stabilization. The gyroscope sensor 180B may also be used in a navigation scenario and a somatic game scenario.

The barometric pressure sensor 180C is configured to measure barometric pressure. In some embodiments, the electronic device calculates an altitude by using the barometric pressure measured by the barometric pressure sensor 180C, to assist in positioning and navigation.

The magnetic sensor 180D includes a Hall effect sensor. The electronic device may detect opening and closing of a flip cover by using the magnetic sensor 180D. In some embodiments, when the electronic device is a flip phone, the electronic device may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device. When the electronic device is static, magnitude and a direction of gravity may be detected. The acceleration sensor may be further configured to identify a posture of the electronic device, and is used in an application such as switching between a landscape mode and a portrait mode or a pedometer.

The distance sensor 180F is configured to measure a distance. The electronic device may measure a distance through infrared or laser. In some embodiments, in a photographing scenario, the electronic device may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device emits infrared light outwards through the light-emitting diode. The electronic device uses the photodiode to detect infrared reflected light from a nearby object. When detecting sufficient reflected light, the electronic device may determine that there is an object near the electronic device. When detecting insufficient reflected light, the electronic device may determine that there is no object near the electronic device. The electronic device may detect, through the optical proximity sensor 180G, that the user holds the electronic device close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device may adaptively adjust brightness of the display 194 based on the sensed brightness of the ambient light. The ambient light sensor 180L may also be configured to automatically adjust a white balance during photographing. The ambient light sensor 180L may further cooperate with the optical proximity sensor 180G to detect whether the electronic device is in a pocket, to prevent an accidental touch.

The fingerprint sensor 180H is configured to collect a fingerprint. The electronic device may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device executes a temperature processing policy based on the temperature detected by the temperature sensor 180J. For example, when the temperature reported by the temperature sensor 180J exceeds a threshold, the electronic device reduces performance of a processor near the temperature sensor 180J, to reduce power consumption and implement thermal protection. In some other embodiments, when the temperature is lower than another threshold, the electronic device heats the battery 142, to avoid an abnormal shutdown of the electronic device caused by a low temperature. In some other embodiments, when the temperature is lower than still another threshold, the electronic device boosts an output voltage of the battery 142, to avoid an abnormal shutdown caused by a low temperature.

The touch sensor 180K is also referred to as a "touch device". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button or a touch button. The electronic device may receive a button input, and generate a button signal input related to user setting and function control of the electronic device.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or pulled out of the SIM card interface 195, to implement contact with or separation from the electronic device. The electronic device may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may also be compatible with different types of SIM cards. The SIM card interface 195 may also be compatible with an external storage card. The electronic device interacts with a network by using the SIM card, to implement functions such as calling and data communication. In some embodiments, the electronic device uses an eSIM, namely, an embedded SIM card. The eSIM card may be embedded into the electronic device, and cannot be separated from the electronic device.

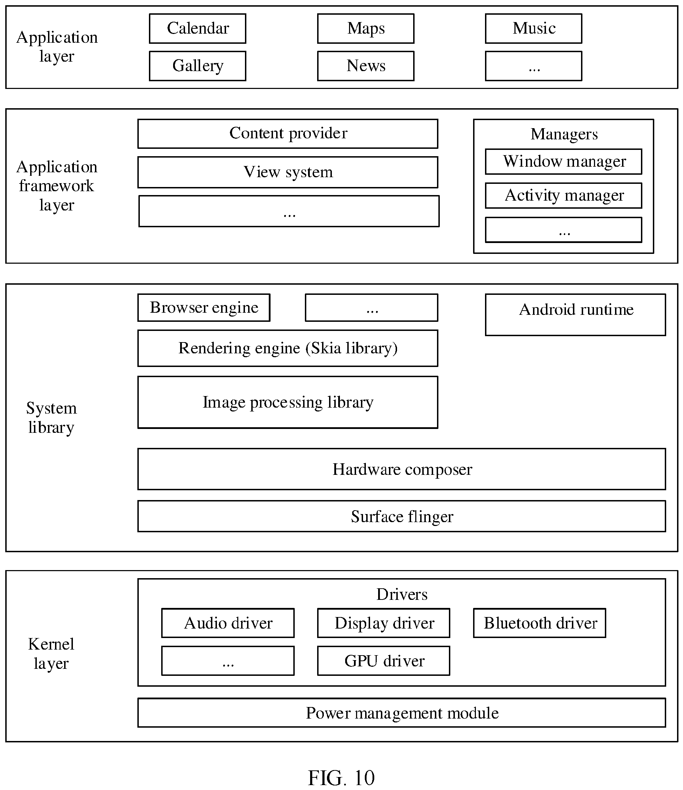

FIG. 10 is an example diagram of the software architecture of the electronic device according to an embodiment of this application.

A software system of the electronic device may use a layered architecture, an event-driven architecture, a microkernel architecture, a micro service architecture, or a cloud architecture. In embodiments of the present invention, an Android system with a layered architecture is used as an example to illustrate the software structure of the electronic device.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 10, the application packages may include applications such as Camera, Gallery, Calendar, Phone, Maps, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 10, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to: store and obtain data, and enable the data to be accessed by an application. The data may include a video, an image, an audio, calls that are made and received, a browsing history and bookmarks, a phone book, and the like.

The view system includes visual controls such as a control for displaying a text and a control for displaying an image. The view system may be configured to construct an application. A display interface may include one or more views. For example, a display interface including a notification icon of Messaging may include a text display view and a picture display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in the status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application running on a background or a notification that appears on a screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called by a Java language and a kernel library of Android.

The application layer and the application framework layer run in the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of functional modules, for example, a browser engine (webkit), a rendering engine (for example, a skia library), a surface flinger, a hardware composer, a media library (Media Library), an image processing library (for example, OpenGL ES), and a rendering engine (for example, a Skia library).

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The image processing library is configured to implement three-dimensional graphics drawing, image rendering, and the like.

The rendering engine is a drawing engine for 2D drawing.

Optionally, in some implementations of this application, the rendering engine provides one or more preset three-dimensional animation effects, and the three-dimensional animation effects are implemented by using a custom shader.

The kernel layer is a layer between hardware and software. The kernel layer includes a display driver, a camera driver, an audio driver, a sensor driver, and the like.

The software architecture shown in FIG. 10 is used as an example to describe an example of a data flow and a software module interaction process in the interface generation method in embodiments of this application.

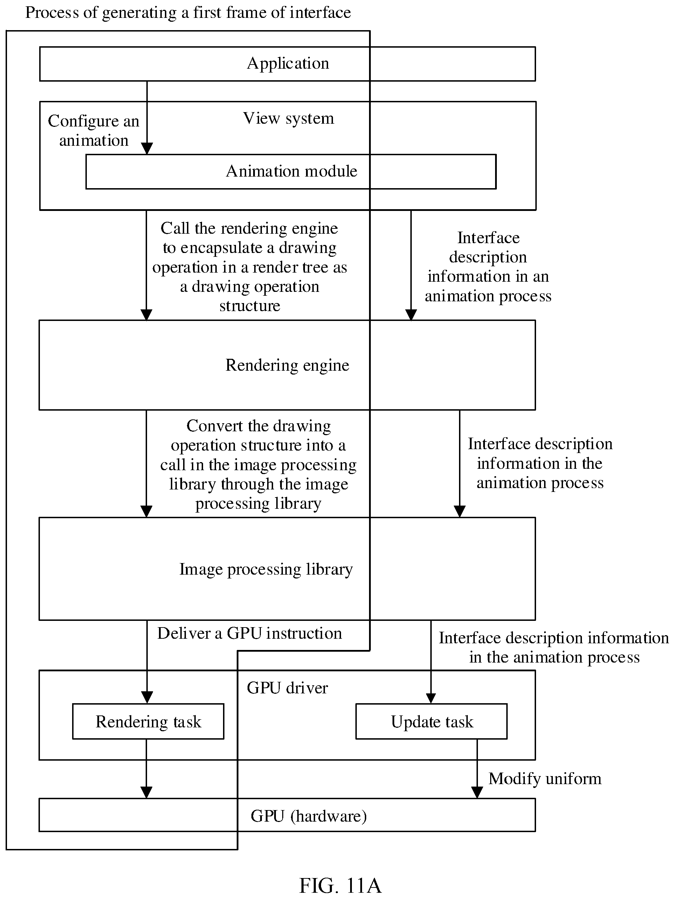

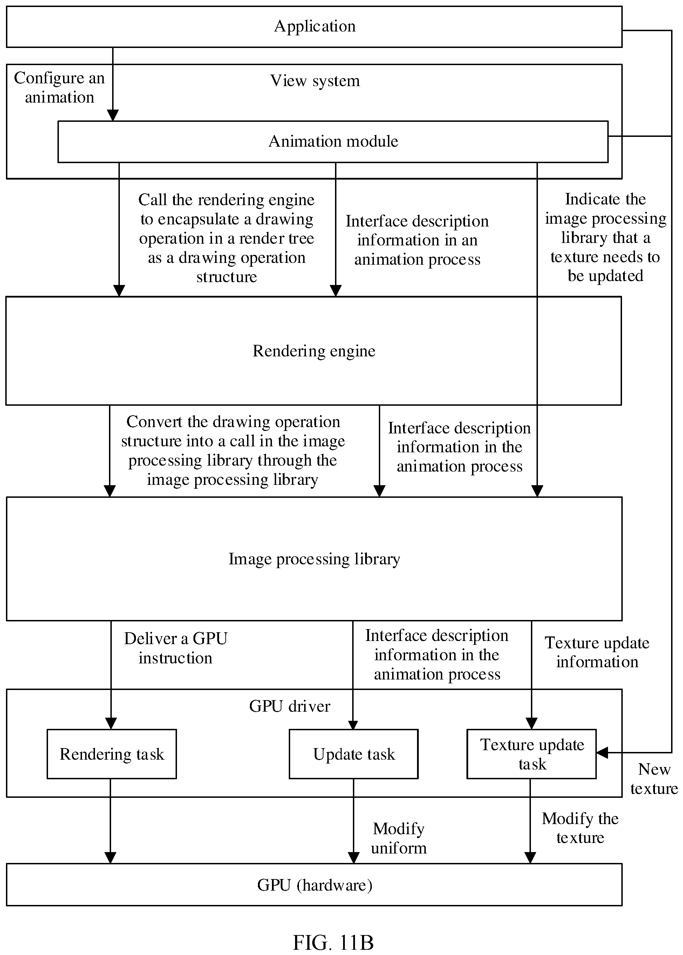

FIG. 11A and FIG. 11B are example diagrams of the data flow and the software module interaction in the interface generation method according to an embodiment of this application.

As shown in FIG. 11A, an application configures an animation through an animation module in the view system. The application stores a drawing operation as a drawing operation structure by calling the rendering engine, and then converts, through the image processing library, the drawing operation structure into a call in the image processing library. Then, the image processing library delivers a GPU instruction corresponding to an interface to a GPU driver, and the GPU driver generates a rendering task for rendering and generating a bitmap.

The content shown in FIG. 11A may be considered as a description example of a data flow and software module interaction of the interface generation method in a generation process of a first frame of interface.

In addition, in the content shown in FIG. 11A, the application further needs to determine, based on the view system, interface description information in the animation process, and then transfer the interface description information in the animation process to the GPU driver. The GPU driver correspondingly generates an update task and updates uniform, for example, obtains uniform from a GPU memory and modifies uniform.

Alternatively, the application further needs to determine, based on the view system, interface description information in the animation process, and transfer update information to the GPU driver based on the interface description information in the animation process. The GPU driver correspondingly generates an update task and updates uniform based on the update information, to update a GPU instruction.

A difference between the content shown in FIG. 11B and the content shown in FIG. 11A is that after determining that the animation relates to a texture update, the animation module may configure a texture update task for the GPU through the image processing library. After the animation module or the application obtains a new texture, the texture update task is used to update an identifier of a texture in a GPU instruction. Further, the GPU executes the GPU instruction to render the updated texture on a bitmap.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, like a server or a data center that integrates one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The storage medium includes any medium that can store program code, such as a ROM, a random access memory RAM, a magnetic disk, or an optical disc.

## Claims

1. An interface generation method, applied to an electronic device, wherein a first application is installed on the electronic device, and the method comprises:
determining, by the electronic device, interface description information in a first animation process after the electronic device receives a first operation, wherein the first operation is used to trigger the electronic device to display a first animation through the first application;
generating, by the electronic device, a first rendering instruction, wherein the rendering instruction is executed by a GPU to generate data of a first interface, and the first interface is a frame of interface in the first animation process;
updating, by the electronic device, the first rendering instruction to a second rendering instruction based on the interface description information in the animation process; and
generating, by the electronic device, a second interface based on the second rendering instruction, wherein the second interface is different from the first interface, and the second interface is a frame of interface in the first animation process.

2. The method according to claim 1, wherein the updating, by the electronic device, the first rendering instruction to a second rendering instruction based on the interface description information in the animation process specifically comprises:
determining, by the electronic device, a first parameter based on the interface description information in the first animation process, wherein the first parameter is used to describe a changing property of a first control on the second interface, and the first control is a view whose display effect changes on the second interface; and
updating, by the electronic device, the first rendering instruction based on the first parameter, to obtain the second rendering instruction.

3. The method according to claim 2, wherein
before the electronic device receives the first operation, the method further comprises: displaying, by the electronic device, a desktop, wherein the desktop comprises the first control, and the first control corresponds to the first application;
that the electronic device receives the first operation specifically comprises: detecting, by the electronic device, that a user taps the first control;
after the electronic device receives the first operation, the method further comprises: the first animation is a start animation of the first application, and in the first animation, a location and a size of a second control change;
the determining, by the electronic device, a first parameter based on the interface description information in the first animation process specifically comprises: determining, by the first electronic device, a first location, wherein the first parameter comprises the first location, the first location is a location of the second control on the second interface, and the second interface is a non-first frame of interface of the first animation; and
the updating, by the electronic device, the first rendering instruction based on the first parameter, to obtain the second rendering instruction specifically comprises: modifying, by the electronic device, a vertex location of the second control in the first rendering instruction to the first location, to obtain the second rendering instruction.

4. The method according to claim 3, wherein the modifying, by the electronic device, a vertex location of the second control in the first rendering instruction to the first location, to obtain the second rendering instruction specifically comprises:
updating, by the electronic device based on the first parameter, a vertex location used in a first method call to the first location, to obtain the second rendering instruction, wherein the first method call is a method call executed by the GPU to draw the second control.

5. The method according to claim 2, wherein the first parameter is used to describe a color, a vertex location, transparency, and/or a scaling ratio of a first view.

6. The method according to claim 2, wherein the first parameter is written by the first application to a first data structure, the first data structure is bound to a render pipeline, and in the render pipeline, the first parameter is read by the electronic device to modify a rendering instruction.

7. The method according to claim 6, wherein the first data structure is uniform.

8. The method according to any one of claims 2 to 7, wherein the method further comprises:
after the electronic device receives the first operation, configuring, by the electronic device, an update task, wherein the update task is configured in a GPU driver; and
the updating, by the electronic device, the first rendering instruction based on the first parameter, to obtain the second rendering instruction specifically comprises: replacing, by the electronic device, a second parameter in the first rendering instruction with the first parameter by using the update task, to obtain the second rendering instruction, wherein the second parameter is used to describe a property of the first control on the first interface.

9. The method according to any one of claims 2 to 7, wherein the method further comprises:
determining, by the electronic device based on the interface description information in the first animation process, that a background map or a foreground map of the first control on the first interface is different from a background map or a foreground map of the first control on the second interface; and
loading, by the electronic device, a first texture, wherein the first texture is the background map or the foreground map of the first control on the second interface, the first parameter comprises an identifier of the first texture, and the first texture is a background map or a foreground map of the first view on the second interface.

10. The method according to any one of claims 1 to 7, wherein a method call of the first rendering instruction is the same as a method call of the second rendering instruction, a resource in the first rendering instruction is different from a resource in the second rendering instruction, the resource in the first rendering instruction is a variable or a fixed value used when the method call of the first rendering instruction is executed, and the resource in the second rendering instruction is a variable or a fixed value used when the method call of the second rendering instruction is executed.

11. The method according to any one of claims 1 to 7, wherein the determining, by the electronic device, interface description information in a first animation process after the electronic device receives a first operation specifically comprises:
after the electronic device receives the first operation, determining, by the electronic device, that a triggered animation is the first animation;
determining, by the electronic device, a view related to the first animation, wherein the view related to the first animation is a view whose display content changes in the first animation process; and
determining, by the electronic device, a property of the view related to the first animation on one or more frames of interfaces in the first animation process.

12. An interface generation method, applied to an electronic device, wherein a first application is installed on the electronic device, and the method comprises:
after the electronic device receives a first operation, generating, by the first application, a first render tree, wherein the first render tree stores a drawing operation used to generate a first interface, the first interface is a first frame of interface of the first application in a first animation, the first operation is used to trigger the electronic device to display the first animation through the first application, from the first interface to a second interface, a location of a first control changes, the first control is at a first location on the second interface, and the second interface is a non-first frame of interface in the first animation;
converting, by the first application, the first render tree into a first rendering instruction;
calling, by the electronic device based on the first rendering instruction, a GPU to generate the first interface;
updating, by the electronic device, a first parameter in the first rendering instruction to the first location, to obtain a second rendering instruction; and
calling, by the electronic device based on the second rendering instruction, the GPU to generate the second interface.

13. The method according to claim 12, wherein the method further comprises:
after the electronic device receives the first operation, determining, by the electronic device, interface description information in a first animation process, wherein the interface description information in the first animation process comprises a second location.

14. The method according to claim 13, wherein the method further comprises: after the electronic device receives the first operation, configuring, by the electronic device, an update task, wherein the update task is configured in a GPU driver; and
the updating, by the electronic device, a first parameter in the first rendering instruction to the first location, to obtain a second rendering instruction specifically comprises: updating, by the electronic device, the first parameter in the first rendering instruction to the first location by using the update task, to obtain the second rendering instruction.

15. The method according to claim 13, wherein the method further comprises:
determining, by the electronic device based on the interface description information in the first animation process, that a background map or a foreground map of the first control on the first interface is different from a background map or a foreground map of the first control on the second interface; and
loading, by the electronic device, a first texture, wherein the first texture is the background map or the foreground map of the first control on the second interface, the first parameter comprises an identifier of the first texture, and the first texture is a background map or a foreground map of a first view on the second interface.

16. An electronic device, wherein the electronic device comprises one or more processors and a memory; and
the memory is coupled to the one or more processors, the memory is configured to store computer program code, the computer program code comprises computer instructions, and the one or more processors invoke the computer instructions, to enable the electronic device to perform the method according to any one of claims 1 to 15.

17. A chip system, wherein the chip system is used in an electronic device, the chip system comprises one or more processors, and the processor is configured to invoke computer instructions, to enable the electronic device to perform the method according to any one of claims 1 to 15.

18. A computer-readable storage medium, comprising instructions, wherein when the instructions are run on an electronic device, the electronic device is enabled to perform the method according to any one of claims 1 to 15.

19. A computer program product comprising instructions, wherein when the computer program product runs on an electronic device, the electronic device is enabled to perform the method according to any one of claims 1 to 15.
